(19) **Europäisches Patentamt / European Patent Office / Office européen des brevets**

(11) **EP 4 439 342 A1**

(12) **EUROPEAN PATENT APPLICATION**
published in accordance with Art. 153(4) EPC

(43) Date of publication:
**02.10.2024 Bulletin 2024/40**

(21) Application number: **21969818.0**

(22) Date of filing: **31.12.2021**

(51) International Patent Classification (IPC):
**G06F 18/00** *(2023.01)*

(52) Cooperative Patent Classification (CPC):
**G06F 3/01**

(86) International application number:
**PCT/CN2021/143960**

(87) International publication number:
**WO 2023/123473 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XU, Xin
Shenzhen, Guangdong 518129 (CN)**

• **XU, Wenkang
Shenzhen, Guangdong 518129 (CN)**
• **WANG, Di
Shenzhen, Guangdong 518129 (CN)**
• **YU, Jiapeng
Shenzhen, Guangdong 518129 (CN)**
• **LAN, Ruidong
Shenzhen, Guangdong 518129 (CN)**
• **LI, Jinjin
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MAN-MACHINE INTERACTION METHOD AND SYSTEM, AND PROCESSING DEVICE**

(57) A man-machine interaction method and system, and a processing apparatus (2200) are provided. The method includes: prompting a user to record an air gesture (1001), obtaining first gesture data collected by a sensor disposed on a vehicle (100) (1002), and then obtaining a first gesture feature parameter based on the first gesture data (1003), where the first gesture data represents a first gesture made by the user, the first gesture is used to control a first function of the vehicle (100), the first gesture feature parameter is used to train a gesture recognition model, and the gesture recognition model is used to recognize a gesture type of the first gesture. The gesture recognition model is trained by recording gesture data of an air gesture made by the user, so that a gesture type of the air gesture defined by the user may be recognized by using the gesture recognition model, to control a corresponding function of the vehicle (100), and meet a requirement of the user to interact with the vehicle (100) by customizing a gesture.

```
┌─────────────────────────────────────────────────────┐   1001
│        Prompt a user to record an air gesture         │
└─────────────────────────────────────────────────────┘
                          │
                          ▼
┌─────────────────────────────────────────────────────┐   1002
│ Obtain first gesture data collected by a sensor       │
│ disposed on a vehicle                                 │
└─────────────────────────────────────────────────────┘
                          │
                          ▼
┌─────────────────────────────────────────────────────┐   1003
│ Perform processing based on the first gesture data,   │
│ to obtain a first gesture feature parameter           │
└─────────────────────────────────────────────────────┘
```

FIG. 10

EP 4 439 342 A1

## Description

## TECHNICAL FIELD

This application relates to the field of intelligent vehicles, and in particular, to a man-machine interaction method and system, and a processing apparatus.

## BACKGROUND

In recent years, with the rapid development of an information technology and an artificial intelligence technology, an in-vehicle interaction system is increasingly intelligent. Although an in-vehicle voice recognition technology is increasingly mature, voice interaction still has some limitations and errors for continuous commands that are difficult to quantify, such as volume adjustment and video playback progress adjustment. A gesture recognition technology may implement operations for functions such as answering a call, adjusting volume, switching a song, and controlling navigation in a vehicle by recognizing different gestures, and may be applied to a plurality of scenarios in which a driver, a passenger at a front passenger position, and a passenger at a rear seat interact with the vehicle. As a sensor technology advances, the vehicle gesture recognition market is expected to grow exponentially. Vehicle manufacturers increasingly expect to implement functional safety technologies in vehicles, to reduce driver distraction. Therefore, gesture recognition by using a camera has become one of configurations of some high-end vehicles. As functions that can be implemented by using gesture recognition for interaction increase, gesture types also increase, and memory costs of a user for a gesture also increases accordingly. The vehicle manufacturers and the user usually expect to reduce the memory costs of the user by customizing a gesture, to improve user experience. However, a current vehicle cannot meet a requirement of the user to interact with a vehicle by customizing a gesture.

## SUMMARY

This application provides a man-machine interaction method and system, and a processing apparatus, to meet a requirement of the user to interact with the vehicle by customizing a gesture.

According to a first aspect, this application provides a man-machine interaction method. The method is executed by a processing apparatus. In the method, a user is prompted to record an air gesture, first gesture data collected by a sensor disposed on a vehicle is obtained, and then a first gesture feature parameter is obtained based on the first gesture data, where the first gesture data represents a first gesture made by the user, the first gesture is used to control a first function of the vehicle, the first gesture feature parameter is used to train a gesture recognition model, and the gesture recognition model is used to recognize a gesture type of the first gesture.

In the foregoing solution, gesture data of the air gesture made by the user is recorded to train the gesture recognition model, so that the gesture type of the air gesture defined by the user can be recognized by using the gesture recognition model, to control a corresponding function of the vehicle, and meet a requirement of the user to interact with the vehicle by customizing a gesture.

In a possible implementation, that a first gesture feature parameter is obtained based on the first gesture data includes: processing the first gesture data by using a feature extraction model, to obtain the first gesture feature parameter, where the feature extraction model is obtained through training based on gesture data and a hand key point before delivery of the vehicle.

In this implementation, the first gesture data is processed by using the feature extraction model trained before the delivery of the vehicle, so that a requirement on computing power of a vehicle end can be reduced, and a customized gesture can be recognized in an in-vehicle scenario in which the computing power of the vehicle end is limited.

In a possible implementation, the feature extraction model includes a hand detection model and a key point detection model; and the processing the first gesture data by using a feature extraction model, to obtain the first gesture feature parameter includes: inputting the first gesture data into the hand detection model, to obtain a hand image output by the hand detection model; inputting the hand image into the key point detection model, to obtain hand key point information that corresponds to the hand image and that is output by the key point detection model; and extracting, based on the hand key point information corresponding to the hand image, the first gesture feature parameter corresponding to the hand image.

In this implementation, dimension reduction can be implemented on the first gesture data, and only a lightweight neural network model is required for model training, so that the requirement on the computing power of the vehicle end can be reduced, and the customized gesture can be recognized in the in-vehicle scenario in which the computing power of the vehicle end is limited.

In a possible implementation, after the processing the first gesture data by using a feature extraction model, to obtain the first gesture feature parameter, the method further includes:

storing the first gesture feature parameter as a first feature vector, where the first gesture feature parameter includes one or more of the following parameters:

    a finger bending degree of a finger;
    an included angle between two fingers;
    a rotation angle of a hand, where the rotation angle of the hand represents a degree of rotation of a palm relative to a vertical direction; or
    a distance between the hand and a first sensor, where the first sensor is a sensor configured to collect the first gesture data.

In a possible implementation, after the obtaining a first gesture feature parameter based on the first gesture data, the method further includes: training a neural network model based on the first gesture feature parameter and the gesture type of the first gesture, to obtain the gesture recognition model, where the gesture recognition model is used to recognize the first gesture represented by the first gesture feature parameter, to obtain the gesture type of the first gesture.

In this manner, the gesture recognition model can be trained only by inputting the first gesture feature parameter and the gesture type of the first gesture, so that dependency of model training on a data volume can be reduced and training time can be shortened.

In a possible implementation, the first gesture data includes a plurality of red green blue RGB values, and the RGB values are determined by an RGB image corresponding to the first gesture.

In a possible implementation, the first gesture data includes a plurality of RGB values and depth values, the plurality of RGB values are determined by the RGB image corresponding to the first gesture, and the depth values are determined by a depth map corresponding to the first gesture.

In a possible implementation, the method further includes: obtaining second gesture data collected by the sensor disposed on the vehicle, where the second gesture data represents a second gesture made by the user, and the second gesture is used to control a second function of the vehicle, where the second gesture is different from the first gesture, and the second function is different from the first function.

In this implementation, a type of a gesture can be bound to a function, and different functions of the vehicle-mounted device can be controlled by using different gestures.

In a possible implementation, the first gesture data is obtained through any one or more of the following sensors: a red green blue RGB camera, a time of flight (TOF) camera, an ultrasonic sensor, and a structured light sensor. The red green blue RGB camera may also be referred to as a color camera.

In a possible implementation, that a user is prompted to record an air gesture includes: prompting the user to record an air gesture displayed on a user interface. In this implementation, an example gesture may be provided for the user, and the user does not need to think about any gesture that needs to be made.

In a possible implementation, after that first gesture data collected by a sensor disposed on a vehicle is obtained, the method further includes: displaying image information of the first gesture data through the user interface, so that the user determines whether a gesture corresponding to the first gesture data is consistent with a gesture made by the user.

In a possible implementation, the method further includes: indicating gesture recording progress, so that the user knows a specific gesture recording status, for example, whether the gesture recording is completed.

In a possible implementation, after that first gesture data collected by a sensor disposed on a vehicle is obtained, the method further includes: indicating that gesture recording is completed.

In a possible implementation, before the indicating that gesture recording is completed, the method further includes: indicating whether to record a next air gesture; and the indicating that gesture recording is completed includes: after a first instruction is received, indicating that gesture recording is completed, where the first instruction instructs not to record the next air gesture.

In this manner, after recording of a gesture is completed, the user may select whether to continue to record an air gesture.

In a possible implementation, the method further includes: obtaining third gesture data collected by the sensor disposed on the vehicle, where the third gesture data indicates a third gesture that has been defined by the user, processing the third gesture data by using the feature extraction model, to obtain a third gesture feature parameter, where the third gesture feature parameter is stored as a third feature vector; inputting the third feature vector into the gesture recognition model, to obtain a type that is of the third gesture and that is output by the gesture recognition model; and responding to a function corresponding to the type of the third gesture.

In this manner, the dimension-reduced third gesture feature parameter is input into the gesture recognition model, so that a gesture type can be recognized in short time, and a function of controlling the vehicle by the user by using a defined gesture is implemented.

According to a second aspect, this application further provides a processing apparatus, configured to perform the method according to the first aspect or any possible implementation of the first aspect. Specifically, the processing apparatus may include modules/units configured to perform the method in the foregoing aspect or any possible implementation of the foregoing aspect These modules/units may be implemented by hardware, or may be implemented by hardware by executing corresponding software.

In a possible implementation, the processing apparatus includes a prompting unit, an obtaining unit, and a processing unit, where

the prompting unit is configured to prompt a user to record an air gesture;
the obtaining unit is configured to obtain first gesture data collected by a sensor disposed on a vehicle, where the first gesture data represents a first gesture made by the user, and the first gesture is used to control a first function of the vehicle; and
the processing unit is configured to obtain a first gesture feature parameter based on the first gesture data, where the first gesture feature parameter is used to train a gesture recognition model, and the gesture recognition model is used to recognize a gesture type of the first gesture.

According to a third aspect, this application further provides a man-machine interaction system, including a vehicle-mounted device and a terminal device, where

the vehicle-mounted device is configured to: prompt a user to select to synchronize a first gesture in the terminal device; and when receiving a second instruction, send a gesture sharing request to the terminal device, where the second instruction instructs to synchronize the first gesture in the terminal device;
the terminal device is configured to: share first gesture data with the vehicle-mounted device in response to the gesture sharing request; and
the vehicle-mounted device is further configured to obtain a first gesture feature parameter based on the first gesture data, where the first gesture feature parameter is used to train a gesture recognition model, and the gesture recognition model is used to recognize a gesture type of the first gesture.

In a possible implementation, the man-machine interaction system further includes a sensor, configured to: collect the first gesture data when receiving a third instruction, where the third instruction instructs not to synchronize the first gesture in the terminal device.

According to a fourth aspect, this application further provides a man-machine interaction system, including a vehicle-mounted device, a sensor, and a server, where

the vehicle-mounted device is configured to prompt a user to record an air gesture;
the sensor is configured to: collect first gesture data, and send the first gesture data to the vehicle-mounted device, where the first gesture data represents a first gesture made by a user;
the vehicle-mounted device is further configured to: obtain a first gesture feature parameter based on the first gesture data, and send the first gesture feature parameter to the server; and
the server is configured to: train a neural network model by using the first gesture feature parameter and a type of the first gesture, to obtain a gesture recognition model; and send the gesture recognition model to the vehicle-mounted device, where the gesture recognition model is used to recognize the first gesture represented by the first gesture feature parameter, to obtain the gesture type of the first gesture.

According to a fifth aspect, this application further provides a man-machine interaction system, including a vehicle-mounted device, a sensor, and a server, where

the vehicle-mounted device is configured to prompt a user to record an air gesture;
the sensor is configured to: collect first gesture data, and send the first gesture data to the vehicle-mounted device, where the first gesture data represents a first gesture made by a user;
the vehicle-mounted device is further configured to send the first gesture data to the server; and
the server is configured to: obtain a first gesture feature parameter based on the first gesture data; train a neural network model by using the first gesture feature parameter and a type of the first gesture, to obtain a gesture recognition model; and send the gesture recognition model to the vehicle-mounted device, where the gesture recognition model is used to recognize the first gesture represented by the first gesture feature parameter, to obtain the gesture type of the first gesture.

According to a sixth aspect, this application further provides a computing device. The computing device includes at least one processor and a memory. The memory is configured to store a computer program or instructions. The processor is configured to invoke the computer program or the instructions from the memory and run the computer program or the instructions. When the processor executes the computer program or the instructions in the memory, a processing apparatus is enabled to perform the operation steps of the method in any one of the first aspect or possible implementations of the first aspect.

According to a seventh aspect, this application further provides a vehicle, where the vehicle includes an apparatus configured to perform the method in any one of the first aspect or possible implementations of the first aspect.

According to an eighth aspect, this application further provides a chip, where the chip includes at least one processor and an interface, the interface is configured to provide program instructions or data for the at least one processor, and the at least one processor is configured to execute the program instructions, so that the method in any one of the first aspect or possible implementations of the first aspect is implemented.

According to a ninth aspect, this application further provides a computer-readable storage medium, where the computer-readable storage medium stores a computer program, and when the computer program is run, the operation steps of the method in any one of the first aspect or possible implementations of the first aspect are implemented.

According to a tenth aspect, this application further provides a computer program product, where the computer program product includes a computer program or instructions, and when the computer program or the instructions are executed by a communication apparatus, the operation steps of the method in any one of the first aspect or possible implementations of the first aspect are implemented.

For details about beneficial effects of the second aspect to the tenth aspect, refer to technical effects that can be achieved by corresponding implementations in the first aspect. Details are not described herein again.

## BRIEF DESCRIPTION OF DRAWINGS

FIG. 1 is a schematic diagram of an image classification-based gesture recognition process according to this application;

FIG. 2 is a schematic diagram of a gesture recognition process in which determining is performed according to a key point rule according to this application;

FIG. 3 is a top view of a vehicle according to an embodiment of this application;

FIG. 4 is a schematic diagram of a cockpit system according to an embodiment of this application;

FIG. 5 is a schematic diagram of a specific scenario to which a man-machine interaction method is applicable according to this application;

FIG. 6 is a schematic diagram of a gesture according to an embodiment of this application;

FIG. 7 is a schematic diagram of a gesture according to an embodiment of this application;

FIG. 8 is a schematic diagram of a system architecture according to this application;

FIG. 9 is a schematic diagram of a gesture recognition process according to this application;

FIG. 10 is a schematic flowchart of a man-machine interaction method according to this application;

FIG. 11 is a schematic diagram of a hand detection result according to this application;

FIG. 12 is a schematic diagram of a hand key point detection result according to this application;

FIG. 13 is a schematic diagram of calculating a finger bending angle according to this application;

FIG. 14 is a schematic diagram of calculating an included angle of two fingers according to this application;

FIG. 15 is a schematic diagram of calculating a hand rotation angle according to this application;

FIG. 16 is a schematic diagram of execution of a gesture classification algorithm according to this application;

FIG. 17 is a schematic diagram of a gesture recognition process according to this application;

FIG. 18 is a schematic diagram of a recording prompt according to this application;

FIG. 19 is a schematic flowchart of a man-machine interaction method according to this application;

FIG. 20 is a schematic flowchart of another man-machine interaction method according to this application;

FIG. 21 is a schematic flowchart of still another man-machine interaction method according to this application;

FIG. 22 is a schematic diagram of a processing apparatus according to this application; and

FIG. 23 is a schematic diagram of a processing apparatus according to this application.

## DESCRIPTION OF EMBODIMENTS

The following further describes this application in detail with reference to accompanying drawings.

As man-machine interaction functions that can be implemented by using gesture recognition increase, gesture types also increase, and memory costs of a user for a gesture also increases accordingly. A vehicle manufacturer and the user usually expect to reduce the memory costs of the user by customizing a gesture, to improve user experience.

There may be different implementations for air gesture recognition. The following describes several example solutions.

A first type is to recognize a gesture by using an image classification-based method. Feature extraction learning and recognition may be performed on a gesture image by using a deep learning technology, to complete gesture recognition. In a deep learning method, feature learning is performed by using a large amount of training data, and gesture recognition accuracy of this method is high.

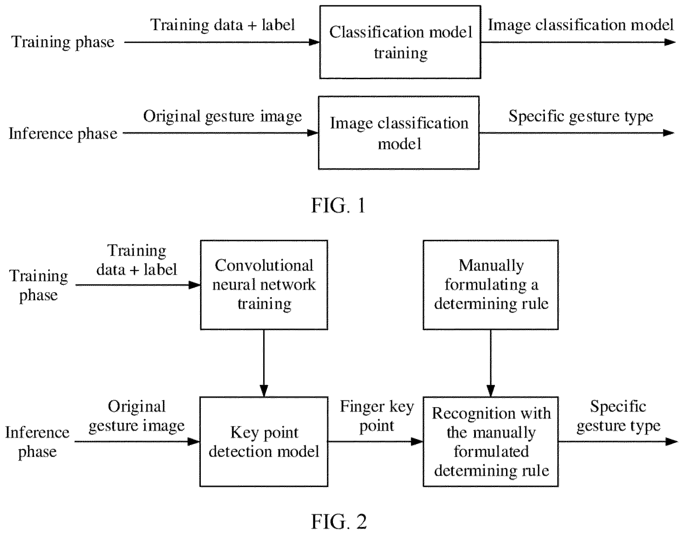

As shown in FIG. 1, an image classification-based gesture recognition process may include two phases: a training phase and an inference phase. In the training phase, a large quantity of gesture images with labels (for example, gesture types and gesture key points) are used as training data and input to a convolutional neural network for training, to obtain an image classification model. The image classification model may be used to extract a gesture feature from an input image, and classify the image based on the extracted gesture feature. In the inference phase, an input original gesture image is classified by using the trained image classification model, and a gesture type corresponding to the original gesture image is recognized.

However, a learning process of an image classification-based method requires high computing power and long training time. Generally, learning is performed in a high-performance computing unit before delivery of a vehicle, and computing power of the computing unit at a vehicle end is limited, and it is difficult to support quick learning of a gesture just defined by a user in a short period. In addition, an image classification-based method further depends on a large amount of training data in a learning process, and is a data-driven method. In a scenario of customizing a gesture, it is difficult to collect a large amount of data in short time of a gesture customizing process for learning of this type of gesture recognition method. Therefore, the image classification-based method cannot meet a requirement of the user to interact with the vehicle by customizing a gesture.

A second type is a method for performing determining according to a key point rule. A hand key point may be first extracted by using a deep learning technology or an image processing technology, and then a gesture type is recognized for the extracted hand key point according to some manually formulated determining rules, to recognize different gesture types.

As shown in FIG. 2, a gesture recognition process in which determining is performed according to a key point rule may include two phases: a training phase and an inference phase. In the training phase, a key point detection capability of a convolutional neural network is trained by using a large quantity of gesture images including key points as training data, to obtain a key point detection model. In the inference phase, the trained key point detection model is used to perform finger key point detection on an input original gesture image, and then a specific gesture type corresponding to the original gesture image is recognized according to a manually formulated determining rule, where the manually formulated determining rule is formulated based on a preset gesture type, and an angle and a position relationship between key points of fingers.

However, in the method for performing determining according to a key point rule, specific gesture types need to be known in advance, and then determining rules are manually formulated based on the specific gesture types. These determining rules are formulated before delivery of a vehicle. If a user wants to customize a gesture when using the vehicle, because the vehicle does not have a determining rule corresponding to the gesture customized by the user, the vehicle cannot recognize a specific type of the gesture customized by the user according to a conventional determining rule. Therefore, the method for performing determining according to a key point rule cannot meet a requirement of the user to interact with the vehicle by customizing a gesture.

To resolve the foregoing problem, an embodiment of this application provides a man-machine interaction method. The method may be performed by a processing apparatus. The processing apparatus may be an apparatus like a processor, a processing chip, or a head unit. A processor/processing chip may be located in the head unit, or may be located in a sensor. In the method, a user is prompted to record an air gesture, first gesture data collected by a sensor disposed on a vehicle is obtained, and then a first gesture feature parameter is obtained based on the first gesture data, where the first gesture data represents a first gesture made by the user, the first gesture is used to control a first function of the vehicle, the first gesture feature parameter is used to train a gesture recognition model, and the gesture recognition model is used to recognize a gesture type of the first gesture, so that a requirement of the user to interact with the vehicle by customizing a gesture is met.

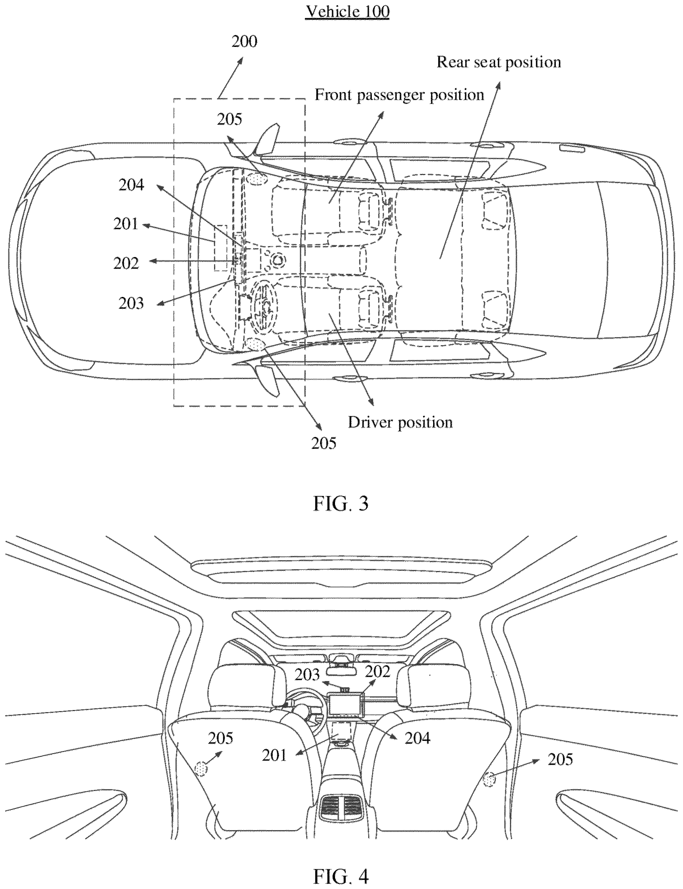

FIG. 3 is a top view of a vehicle according to an embodiment of this application.

As shown in FIG. 3, the vehicle 100 includes a vehicle body and a cockpit, and the cockpit includes a cockpit system 200 located in front of a driver position and a front passenger position.

The cockpit system 200 in the vehicle shown in FIG. 3 is locally magnified below. As shown in a schematic diagram of the cockpit system shown in FIG. 4, the cockpit system 200 includes a cockpit controller 201, a vehicle-mounted display 202, an image shooting apparatus 203, a microphone array 204, and a speaker 205.

Functions that can be implemented by components in the cockpit system 200 are described below with reference to FIG. 4.

The cockpit controller 201 is a complex computing system. In embodiments of this application, the cockpit controller 201 may receive and process gesture data collected by an image collection apparatus. For example, gesture data is collected by a camera or a radar. For example, a gesture feature parameter is obtained based on the gesture data. The gesture feature parameter may be used to train a gesture recognition model, the gesture recognition model is used to recognize a gesture type of an air gesture, and the gesture data may be a gesture image or video information collected by a camera. The cockpit controller 201 may further push the gesture data collected by the camera to a display for display. The cockpit controller 201 may further receive and process an audio collected by a microphone, where the audio includes sound information, and different operations are performed for different sound instructions. The cockpit controller may further output voice information through the speaker.

The vehicle-mounted display 202 is a display device, and may display a user interface.

The image shooting apparatus 203 may include one or more cameras. The camera is an image collection component, and may collect gesture data, and transmit the gesture data to the cockpit controller 201 for processing.

The microphone array 204 is a sound collection component, and is an energy conversion component that can convert a sound signal into an electrical signal. The microphone array 204 may input a collected audio to the cockpit controller.

The speaker 205 is an energy conversion device that converts an electrical signal into a sound signal, and the cockpit controller 201 may output an audio to the speaker 205 for output through the speaker 205.

A structure of the cockpit system 200 is only an example. The cockpit system 200 may further include another sensor or another component, and details are not described herein again.

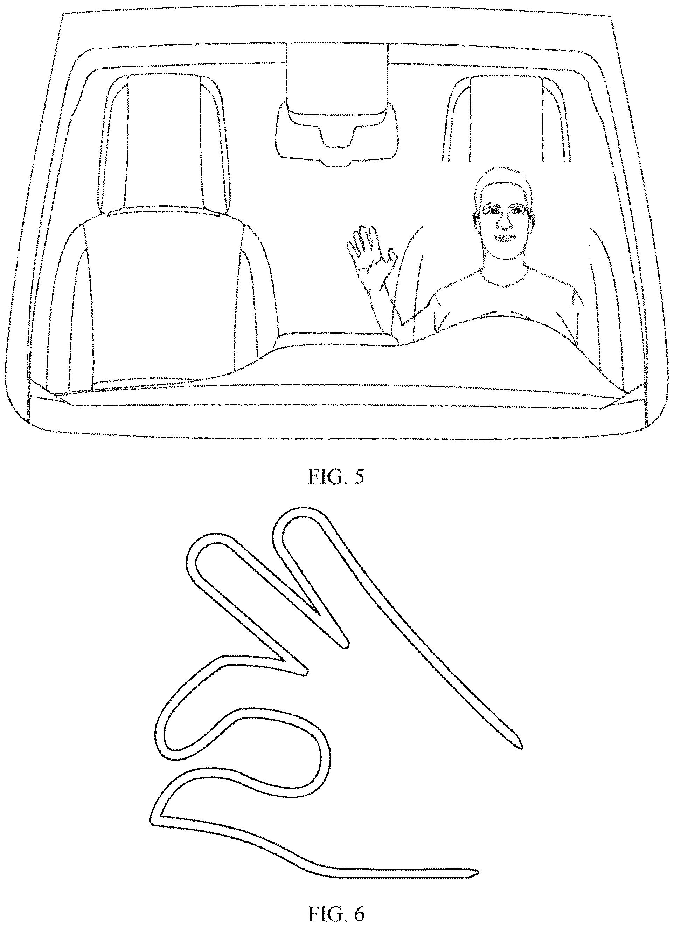

FIG. 5 is a specific scenario to which the man-machine interaction method provided in this application is applicable. The specific scenario may be an in-vehicle scenario. A binding relationship may be set between a user gesture and a function implemented by controlling a vehicle-mounted device. A user may recognize a type of the user gesture by using a processing apparatus, and then deliver a control instruction corresponding to the type of the user gesture to a vehicle-mounted device (for example, a window, a vehicle-mounted sound box, a seat, or an air conditioner), to implement a corresponding function. For example, a "Five-finger opening" type is bound to an air conditioner turning-on function. After recognizing that a user gesture is the "Five-finger opening" type shown in FIG. 5, the processing apparatus may generate a control instruction for the air conditioner, and then control, based on the control instruction, the air conditioner to be turned on.

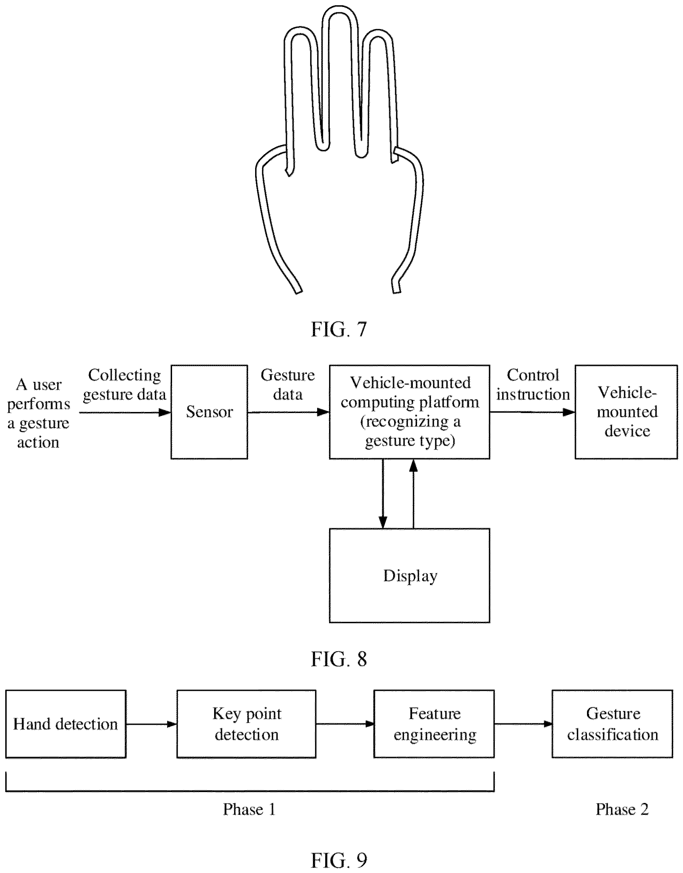

The user may further deliver a control instruction to another vehicle-mounted device by using the processing apparatus. For example, an "OK gesture" type is bound to a vehicle window opening function. After recognizing that a user gesture is the "OK gesture" type shown in FIG. 6, the processing apparatus controls a vehicle window to open. For another example, a "three-finger straightening" type is bound to a call answering function. After recognizing that the user gesture is the "three-finger straightening" (a gesture of bending a thumb and a little finger and straightening three fingers in the middle) type shown in FIG. 7, the processing apparatus controls a call to be connected.

In addition, the man-machine interaction method provided in this application may be further applicable to another scenario. For example, in a smart home scenario, a user may recognize a type of a gesture of the user by using a processing apparatus, and then deliver a control instruction to a home device (for example, a floor-sweeping robot, a desk lamp, or a curtain) in the smart home scenario. For example, if a type of a user gesture is "Five-finger opening", the processing apparatus controls the floor-sweeping robot to be turned on. For another example, if a type of a user gesture is "Fist gesture", the processing apparatus controls the floor-sweeping robot to be turned off. The man-machine interaction method provided in this application may be further applicable to a scenario like a smartphone or industrial remote control. Details are not described herein again.

In embodiments of this application, an example in which the man-machine interaction method is applied to an in-vehicle scenario is used for description. Details are not described below.

An embodiment of this application provides a schematic diagram of a system architecture in an in-vehicle scenario. As shown in FIG. 8, the system architecture includes a sensor, a vehicle-mounted computing platform, and a vehicle-mounted device.

The sensor may collect gesture data of a gesture motion made by a user, and then transmit the gesture data to the vehicle-mounted computing platform. Herein, the sensor is, for example, a camera. For example, the camera includes but is not limited to a red green blue (red green blue, RGB) camera and a time of flight (time of flight, TOF) camera. Main functions of the camera include: collecting an image of a gesture of the user in a process of customizing a gesture by the user, and completing gesture recording; and collecting an image of a gesture made by the user in a process of controlling the vehicle-mounted device by using the customized gesture, and then completing gesture recognition.

The vehicle-mounted computing platform may include the following functions: (1) Program running control, for example, controlling specific execution and data transmission in each phase like image collection, image preprocessing, display interaction, and data stream transmission. (2) An AI computing unit, including at least an operation CPU, and configured to perform execution and operation of a deep learning algorithm. In an in-vehicle scenario, the vehicle-mounted computing platform may recognize a gesture type of the user by using a specific algorithm, and transmit a control instruction corresponding to the gesture type to the vehicle-mounted device based on a recognition result. The man-machine interaction method in embodiments of this application is mainly applied to the vehicle mounted computing platform. It should be understood that the man-machine interaction method in embodiments of this application may alternatively be performed by a head unit or a processor.

After first gesture data is collected, as shown in FIG. 9, two phases may be included:

A phase 1 is a gesture feature extraction phase, including three parts: hand detection, key point detection, and feature engineering. All models (for example, a hand detection model and a key point detection model) in the phase 1 are trained before delivery and remain unchanged, and are not trained again in a gesture customizing phase. In embodiments of this application, in the phase 1, an original image may be detected by using the hand detection model, and a hand image is output. Then, the hand image is input into the key point detection model, and a position of a hand key point in the hand image is located, to obtain hand key point information. Then, in the feature engineering phase, a gesture feature parameter is extracted based on the hand key point information. The gesture feature parameter may be used in a phase 2, namely, a gesture classification phase.

The phase 2 is the gesture classification phase, and includes a gesture recognition model. The gesture recognition model is used to learn or classify the gesture feature parameter extracted in the phase 1. For example, in a gesture customizing scenario, the gesture recognition model may re-learn a gesture customized by a user based on the gesture feature parameter. The gesture recognition model in this phase only needs to use a simple classification model, has little dependency on data, and has a short learning period. For another example, in a gesture use scenario, the gesture recognition model may perform gesture recognition based on the gesture feature parameter and the gesture recognition model.

A vehicle body device is, for example, another peripheral device configured to control an air conditioner, music, a skylight, or the like.

The system architecture may further include a display, for example, a common display or a touch display. The display may be configured to: display a collected customized gesture of the user, so that the user can see a gesture of the user, to better adjust a hand posture and position of the user, and improve quality of collected gesture data; and perform interaction in an entire process of customizing a gesture by the user, and display some prompt information.

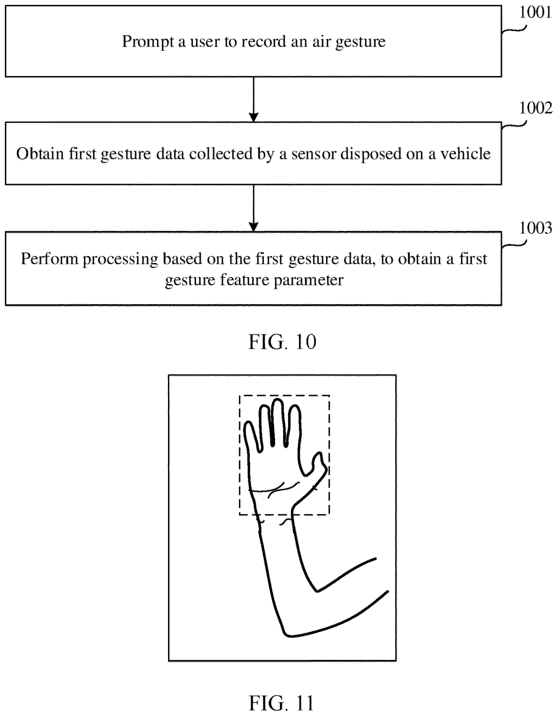

Based on the foregoing content, the following describes a man-machine interaction method provided in an embodiment of this application. The method may be performed by a processing apparatus. The processing apparatus may be an apparatus like a processor, a processing chip, or a head unit. A processor/processing chip may be located in the head unit, or may be located in a sensor. For ease of description, the following uses an example in which the processing apparatus performs the method for description. As shown in FIG. 10, the method includes the following steps.

Step 1001: Prompt a user to record an air gesture.

In this embodiment of this application, there may be a plurality of implementations of a specific prompt manner in step 1001.

In a possible implementation, the user is prompted, through a sound, to record the air gesture. During specific implementation, a voice prompt may be output through a speaker.

In another possible implementation, the user is prompted, through vibration, to record the air gesture. During specific implementation, a vibration sensor may be used to perform vibration prompting. For example, the user is prompted, through vibration, to start recording the air gesture, and the user makes a corresponding customized gesture, for example, a three-finger stretching gesture shown in FIG. 7, based on the prompt.

In still another possible implementation, a user interface is used to prompt the user to record the air gesture. During specific implementation, prompt information may be displayed on the user interface on a vehicle-mounted display to prompt the user to record the air gesture.

In an example, the user is prompted, through a user interface or a sound, to make a customized gesture used to implement a call answering function. For example, a prompt sound is "Customize a gesture of a call answering function", or prompt information "Customize a gesture of a call answering function" is displayed on the user interface. The user makes, based on the prompt, the three-finger stretching gesture shown in FIG. 7. After obtaining gesture data of a "three-finger stretching" gesture type, the processing apparatus binds the "three-finger stretching" gesture type to a "call answering" function.

In another example, the user is prompted, through a user interface, to customize a gesture, and the user makes, based on the prompt, the three-finger stretching gesture shown in FIG. 7. After obtaining gesture data of the "three-finger stretching" gesture type, the processing apparatus prompts the user to set a corresponding function for the customized "three-finger stretching" gesture type. For example, the user sets the "call answering" function for the "three-finger stretching" gesture type.

The foregoing several prompt manners may also be used in combination. For example, the user is prompted, through the user interface, to start recording an air gesture, and after gesture data is collected through a sensor of a vehicle, vibration or a sound indicates that the gesture data is collected.

The foregoing step 1001 may be implemented in the following plurality of manners.

In a possible implementation, the user is prompted to start recording the air gesture, for example, prompted to "start" through a user interface or a sound. Then, countdown is performed. For example, when a countdown of 10s ends, gesture data starts to be collected.

In another possible implementation, the user is prompted whether to record the air gesture. After the user selects to record the air gesture, the user is prompted to select a function corresponding to the air gesture, and then prompted to "start" through a user interface or a sound. Then, countdown is performed. For example, when a countdown of 10s ends, gesture data starts to be collected.

In still another possible implementation, in a scenario in which the user controls a vehicle-mounted device by using the air gesture, the following cases may occur: For a gesture made by the user, after the processing apparatus obtains gesture data of the gesture collected by a sensor, a function corresponding to a gesture type of the gesture cannot be recognized, in other words, gesture data of the gesture type has not been collected before, and therefore the function corresponding to the gesture type cannot be found. In this case, the user may be prompted whether to record an air gesture, to add a customized air gesture to a system, or the user is prompted whether to record the gesture into the system, and after the user selects to record the gesture into the system, a corresponding function is set for the gesture type.

In yet another possible implementation, the user interface may provide the user with some example gestures of the air gesture, and then prompt the user to record the air gesture displayed on the user interface.

Step 1002: Obtain first gesture data collected by a sensor disposed on a vehicle, where the first gesture data indicates a first gesture made by the user, and the first gesture is used to control a first function of the vehicle.

Optionally, the first gesture data may be obtained in a plurality of implementations.

In a possible implementation, the first gesture data may be collected by a single RGB camera. In this implementation, the first gesture data may include a plurality of RGB values, and the RGB values are determined by an RGB image corresponding to the first gesture. In this implementation, the first gesture data includes only two-dimensional information, and a hand distance in the following may be estimated by using a monocular depth estimation algorithm.

In another possible implementation, the first gesture data may be obtained by a plurality of sensors, for example, one or more of an RGB monocular camera, an RGB binocular camera, a TOF camera, an ultrasonic sensor, or a structured light sensor. In this implementation, the first gesture data may include a plurality of RGB values and a plurality of depth values, and the plurality of RGB values and the plurality of depth values are determined by a red green blue-depth (red green blue-depth, RGB-D) image corresponding to the first gesture.

The RGB-D image includes an RGB image and a depth (depth) image, the plurality of RGB values are determined by the RGB image corresponding to the first gesture, and the plurality of depth values determined by a depth map corresponding to the first gesture. The RGB image is a three-channel color image, and the depth map is similar to a grayscale image. A difference between the depth map and the grayscale image lies in that a pixel value of each pixel on the depth map is an actual distance from the sensor to an object. Generally, there is a one-to-one correspondence between pixels on two images, namely, the RGB image and the depth map included in the RGB-D image.

For example, the first gesture data may be collected through the RGB monocular camera and the TOF camera. The RGB monocular camera may obtain the RGB image, and the TOF camera may collect the depth map. The RGB image and the depth map are used together as the first gesture data. In this example, the depth map may be used to accurately obtain the hand distance in the following.

For example, the first gesture data may be collected through the RGB monocular camera and the structured light camera. The RGB camera may obtain the RGB image, and the structured light camera may obtain the depth map through collection. The RGB image and the depth map are used together as the first gesture data. In this example, the depth map may be used to accurately obtain the hand distance in the following.

After the first gesture data collected by the sensor disposed on the vehicle is obtained in step 1002, image information corresponding to the first gesture data may be further displayed through the user interface, where the image information may be a gesture icon or a text, so that the user confirms whether a gesture corresponding to the first gesture data is consistent with a gesture made by the user.

For example, the first gesture made by the user is a fist gesture. After gesture data of the fist gesture is obtained, a specific gesture type is recognized based on the collected gesture data, and then a gesture icon or a text corresponding to the gesture data is displayed on a user interface on a display. The user may determine, based on the image information displayed on the user interface, whether the system collects the fist gesture made by the user. If the image information displayed on the user interface is an icon or a related text of the fist gesture, it indicates that what is collected is a fist gesture that the user wants to set. If the image information displayed on the user interface is not an icon or a related text of the fist gesture, it indicates that what is collected is not a fist gesture that the user wants to set, and the user may select to re-record the air gesture. In some other embodiments, after a gesture icon or a text corresponding to the gesture data is displayed on a user interface on a display, a button for determining whether to reset a gesture may be further displayed. If the gesture needs to be reset, a "Yes" button may be selected; or if the device gesture does not need to be reset, a "No" button may be selected.

In some other embodiments, gesture recording progress may be further indicated through a user interface or a sound. For example, a countdown may be indicated through a sound or displayed through a user interface, to prompt the user with a time point at which recording starts or ends, and remaining recording time. For another example, a completion percentage may indicate recording progress. For another example, a rotating symbol or icon may indicate that recording is being performed, and the symbol or icon stops rotating to indicate that recording is completed.

Step 1003: Perform processing based on the first gesture data, to obtain a first gesture feature parameter.

Herein, the first gesture feature parameter is used to train a gesture recognition model, and the gesture recognition model is used to recognize a gesture type of the first gesture.

In a possible implementation, the first gesture data may be processed by using a feature extraction model, to obtain the first gesture feature parameter, where the feature extraction model is obtained through training based on gesture data and a hand key point before delivery of the vehicle.

The feature extraction model may include a hand detection model and a key point detection model. Processing the first gesture data by using the feature extraction model to obtain the first gesture feature parameter may be implemented in the following manner: inputting the first gesture data into the hand detection model, to obtain a hand image output by the hand detection model; inputting the hand image into the key point detection model, to obtain hand key point information that corresponds to the hand image and that is output by the key point detection model; and extracting, based on the hand key point information corresponding to the hand image, the first gesture feature parameter corresponding to the hand image. During specific implementation, the first gesture feature parameter corresponding to the hand image is extracted based on the hand key point information corresponding to the hand image and according to a predefined feature extraction rule. The gesture feature parameter may be stored as a first feature vector.

It should be noted that, the first feature vector is generated in a gesture learning process in which the user customizes a gesture used to control an in-vehicle function in mid-air, and a second feature vector in the following is generated in a gesture recognition process in which the user uses the customized gesture to implement the in-vehicle function corresponding to the mid-air control.

For example, the first gesture data is an original image shown in FIG. 11. After the original image is obtained, hand detection may be performed on the original image. For example, hand detection is performed on the input original image by using a target detection algorithm, to locate a position of a hand, for example, a position framed by a dashed box in FIG. 11. For example, the target detection algorithm may be a you only look once version 3 (you only look once version 3, YOLOv3) algorithm, a you only look once version 4 (YOLOv4) algorithm, a you only look once version 5 (YOLOv5) algorithm, a single shot multibox detector (single shot multibox detector, SSD) algorithm, or another algorithm that can be used to perform hand detection on the original image. This is not limited herein. Before the target detection algorithm is used, the target detection algorithm may be properly pruned and quantized, so that the target detection algorithm meets a performance requirement of real-time detection on a CPU. An output result of the target detection algorithm is a hand image cropped from the original image, for example, a hand image framed by the dashed box shown in FIG. 11. The hand image may be used for subsequent hand key point detection.

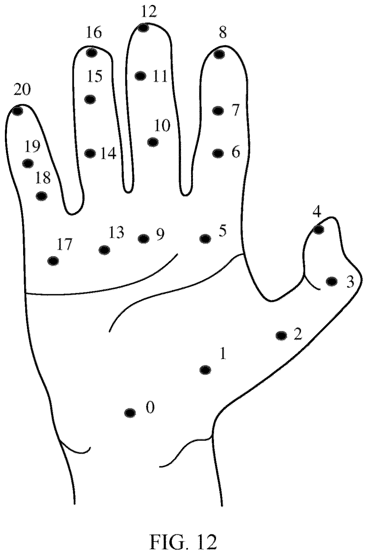

A key point positioning algorithm may be used for hand key point detection. Key point positioning is performed on a hand image obtained through hand detection and cropping, and positions of 21 hand key points are located, and may be numbered from 0 to 20. As shown in FIG. 12, the 21 hand key points include one palm heel key point (a key point 0) and 20 finger key points (key points 1 to 20), where each finger includes four key points, and in the 20 finger key points, key points 1, 5, 9, 13, and 17 are finger end key points, key points 2, 6, 10, 14, and 18 are near-end finger key points, key points 3, 7, 11, 15, and 19 are far-end finger key points, and key points 4, 8, 12, 16, and 20 are fingertip key points.

After the 21 hand key points are located, a feature engineering phase may start. A first gesture feature parameter is extracted based on information about the 21 hand key points, and then the first gesture feature parameter is stored as a first feature vector.

In a possible implementation, the first gesture feature parameter includes one or more of the following parameters:

a finger bending degree of a finger;

an included angle between two fingers;

a rotation angle of a hand, where the rotation angle of the hand represents a degree of rotation of a palm relative to a vertical direction; or

a distance between the hand and a first sensor, where the first sensor is a sensor configured to collect the first gesture data.

The following describes the gesture feature parameters.

(1) Finger bending degree: is used to represent a bending degree of a finger.

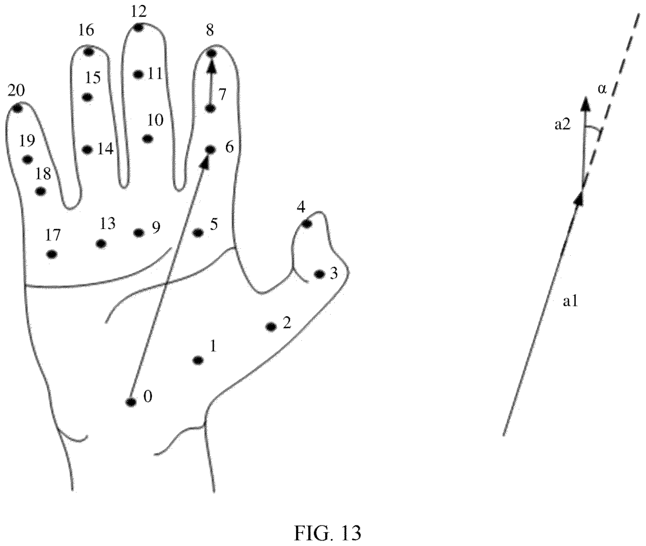

In an example, an index finger shown in FIG. 13 is used as an example. A finger bending degree of the index finger may be determined by the following process:

First, a vector a1 is formed by a connection line between a palm heel key point (namely, a key point 0) and a near-end finger key point (namely, a key point 6) corresponding to the index finger.

Second, another vector a2 is formed by a connection line between a far-end finger key point (namely, a key point 7) and a fingertip key point (namely, a key point 8) corresponding to the index finger.

Finally, an included angle $\alpha$ ($0 \leq \alpha \leq 180$) between the vector a1 and the vector a2 is calculated, and the included angle $\alpha$ is used as a finger bending degree of the index finger. For example, a specific calculation formula for the finger bending degree $\alpha$ of the index finger is shown in the following formula (1):

$$\alpha = arccos \frac{a1 \cdot a2}{\sqrt{|a1||a2|}} \quad (1)$$

During specific implementation, finger bending degrees of five fingers shown in FIG. 13 may be separately determined, and a first feature vector may be constructed based on at least the finger bending degrees of the five fingers.

(2) Included angle between two fingers

An included angle between any two fingers may be an included angle between two adjacent fingers, for example, an included angle between a little finger and a ring finger. The included angle between any two fingers may alternatively be an included angle between two non-adjacent fingers, for example, an included angle between a little finger and a middle finger. The following uses an example in which an included angle between two adjacent fingers is calculated for description.

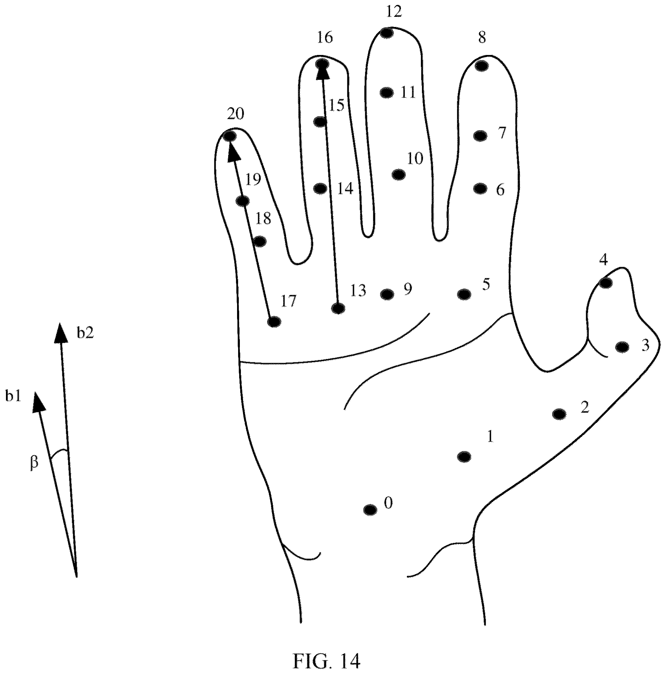

In an example, the little finger and the ring finger shown in FIG. 14 are used as an example. An included angle between the little finger and the ring finger may be determined by the following process:

First, a connection line between a finger end key point (namely, a key point 17) and a fingertip key point (namely, a key point 20) of the little finger is used as a direction vector b1 of the little finger.

Second, a connection line between a finger end key point (namely, a key point 13) and a fingertip key point (namely, a key point 16) of the ring finger is used as a direction vector b2 of the ring finger.

Then, a vector included angle β (0≤β≤180) between the direction vector b 1 of the little finger and the direction vector b2 of the ring finger is calculated, and the vector included angle β is used as the included angle between the two fingers. For example, a specific calculation formula of the included angle β between the little finger and the ring finger is shown in the following formula (2):

$$\beta = arccos \frac{b1 \cdot b2}{\sqrt{|b1||b2|}} \quad (2)$$

In some embodiments, an included angle between any two adjacent fingers may be separately determined, for example, an included angle between a little finger and a ring finger, an included angle between a ring finger and a middle finger, an included angle between a middle finger and an index finger, and an included angle between an index finger and a thumb. Then, a first feature vector may be constructed based on at least one or more of the four included angles.

In some other embodiments, an included angle between each of five fingers and another finger shown in FIG. 14, for example, an included angle between the little finger and the ring finger, an included angle between the little finger and the middle finger, an included angle between the little finger and the index finger, an included angle between the little finger and the thumb, an included angle between the ring finger and the middle finger, an included angle between the ring finger and the index finger, an included angle between the ring finger and the thumb, an included angle between the middle finger and the index finger, an included angle between the middle finger and the thumb, and an included angle between the index finger and the thumb may be separately determined, and then a first feature vector may be constructed based on at least one or more of the 10 included angles.

(3) Rotation angle of a hand: is used to represent a degree of rotation of a palm relative to a vertical direction.

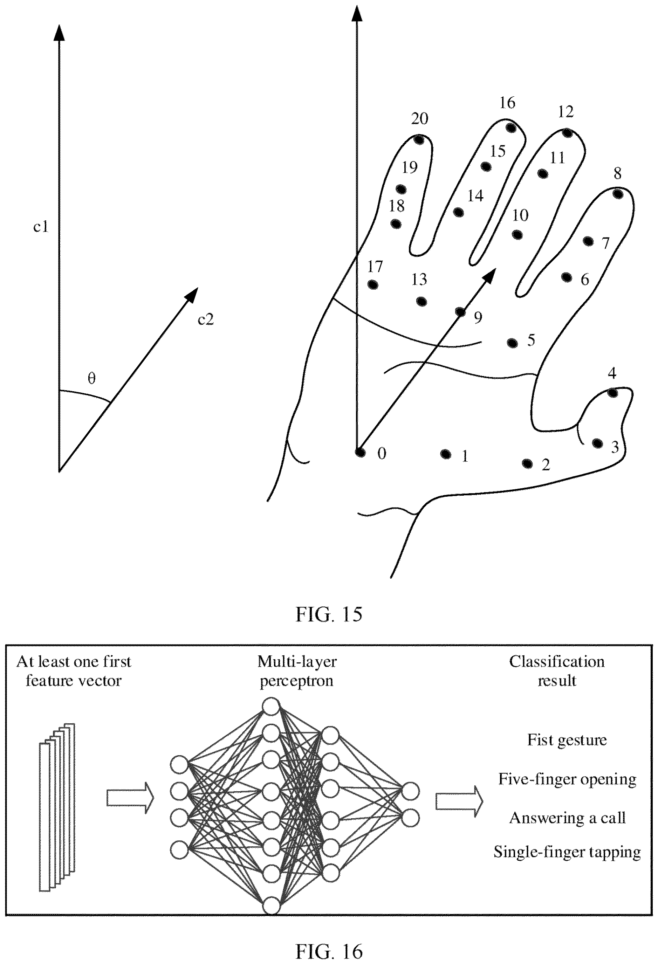

As shown in FIG. 15, the rotation angle of a hand may be determined in the following manner:

First, a connection line between a palm heel key point (namely, a key point 0) and a finger end key point (namely, a key point 9) corresponding to the middle finger is used as a hand orientation vector c2.

Then, a vector included angle θ (-180<θ≤+180) between the hand orientation vector c2 and a vertical direction vector c1 is calculated as the hand rotation angle. A specific calculation formula of the hand rotation angle is shown in the following formula (3):

$$\theta = arccos \frac{c1 \cdot c2}{\sqrt{|c1||c2|}} \quad (3)$$

(4) Distance between the hand and a first sensor

For example, the first sensor is a camera. The camera may be an RGB monocular camera, and a distance between the hand and a plane on which the RGB monocular camera is located may be estimated by using a monocular depth estimation algorithm. The camera may alternatively be a TOF camera. An RGB-D image may be directly taken, and a distance between the hand and the TOF camera is obtained through the RGB-D image.

Then, information like a finger bending degree of each finger, an included angle between two fingers in any one or more groups, the hand rotation angle, and the distance between the hand and the first sensor may be normalized, to obtain a normalized gesture feature parameter, where the normalized gesture feature parameter forms the first feature vector. For example, a value range of the finger bending degree is 0° to 180°, and may be normalized to 0 to 1. For example, if a finger bending degree is 90 degrees, a corresponding value obtained after normalization (for example, 90 divided by 180) is 0.5. For another example, a value range of the distance between the hand and the first sensor depends on a size of a cockpit of a vehicle and an installation position of the first sensor. For example, the first sensor is installed at a rear view mirror above a central display screen of a vehicle, and a length of a cockpit is 2 m. For example, the distance between the hand and the first sensor is 0.5 m, and the distance obtained after normalization (for example, 0.5 divided by 2) is 0.25.

After step 1003, the gesture recognition model may be further obtained through training based on the gesture feature parameter. In a possible implementation, an initial neural network model is trained based on the first gesture feature parameter (or the first feature vector) and the type of the first gesture, to obtain the gesture recognition model. The gesture recognition model is used to recognize the first gesture represented by the first gesture feature parameter (or the first feature vector), to obtain the gesture type of the first gesture.

Because the first feature vector extracted in the feature engineering phase is a low-dimensional vector obtained after abstraction and dimension reduction, and includes strong semantic information, an initial neural network model used in a classification phase needs to be trained only by using a lightweight simple machine learning model, for example, a simple neural network or a multi-layer perceptron. For example, the initial neural network model is, for example, a multi-layer perceptron shown in FIG. 16, at least one first feature vector is input as a sample to the multi-layer perceptron shown in FIG. 16, and a classification result (namely, a type of a first gesture) is output through inference. For example, the classification result is one of "Five-finger opening", "Single-finger tapping", "Fist gesture", "Answering a call", and the like.

In this embodiment of this application, an output result of the gesture recognition model obtained through training may be a gesture type of the air gesture, or may be a function corresponding to the air gesture, or may be a gesture type of the air gesture and a function corresponding to the air gesture.

In some embodiments, after collecting the first gesture data, the sensor of the vehicle inputs the first gesture data with a gesture type label into the initial neural network model for training, to finally obtain the gesture recognition model. An output result of the gesture recognition model in a gesture recognition phase is the gesture type of the air gesture.

In some other embodiments, after collecting the first gesture data, the sensor of the vehicle inputs the first gesture data with a first function label into the initial neural network model for training, to finally obtain the gesture recognition model. An output result of the gesture recognition model in a gesture recognition phase is the function corresponding to the air gesture.

In some other embodiments, after collecting the first gesture data, the sensor of the vehicle inputs the first gesture data with a gesture type and a first function label into the initial neural network model for training, to finally obtain the gesture recognition model. An output result of the gesture recognition model in a gesture recognition phase is the gesture type of the air gesture and the function corresponding to the air gesture.

In embodiments of this application, the user may record a plurality of air gestures. For example, the user makes a second gesture, the sensor of the vehicle collects second gesture data, and the processing apparatus obtains the second gesture data collected by the sensor disposed on the vehicle. The second gesture data represents the second gesture made by the user, the second gesture is used to control a second function of the vehicle, the second gesture is different from the first gesture, and the second function is different from the first function. In this way, the user may record a plurality of different air gestures, to implement controlling different functions of the vehicle-mounted device.

In a process of recording an air gesture, as long as one piece of gesture data is collected, the processing apparatus simultaneously processes the collected gesture data and trains the gesture recognition model, without waiting for completion of recording of all gestures. In this way, model training time can be saved. In addition, a user does not perceive a gesture data processing process and a gesture recognition model training process, so that the user can subjectively feel that there is no too much waiting time and learning time.

In embodiments of this application, the processing apparatus generates a gesture feature parameter based on collected gesture data, constructs a feature vector based on the gesture feature parameter, and then recognizes a gesture type based on the feature vector. The feature vector has a low dimension and includes high semantic information. Therefore, dependency on a data volume can be reduced, and training time can be greatly shortened. A customized gesture can be recognized in an in-vehicle scenario in which computing power of a vehicle-mounted device is limited, so that a requirement of the user to interact with the vehicle by customizing a gesture is met.

After the first gesture data collected by the sensor disposed on the vehicle is obtained in step 1002, that gesture recording is completed may be further indicated.

In a possible implementation, after gesture data of an air gesture is collected, that gesture recording is completed is indicated. Then, whether to record a next air gesture may be indicated. When the user selects to continue to perform recording, gesture data of the next air gesture continues to be collected, and a plurality of air gestures may be continuously recorded. Each time gesture data of one air gesture is collected, that gesture recording is completed is indicated.

In another possible implementation, after the gesture data of the air gesture is collected, whether to record a next air gesture is indicated; if a first instruction is received, the first instruction instructs not to record the next air gesture, and that gesture recording is completed is indicated; or if a second instruction is received, the second instruction instructs to continue to record the next air gesture, gesture data of the next air gesture is collected, and then whether to record a next air gesture is indicated. In this implementation, when a plurality of air gestures are continuously collected, after all the plurality of air gestures are recorded, that gesture recording is completed may be indicated.

In a possible implementation, a defined air gesture type may be recognized by using the gesture recognition model obtained through training. Specifically, the following manners described in S1 to S3 may be used for implementation.

S 1: Obtain third gesture data collected by the sensor disposed on the vehicle, where the third gesture data indicates a third gesture that has been defined by the user.

S2: Process the third gesture data by using the feature extraction model, to obtain a third gesture feature parameter, where the third gesture feature parameter is stored as a third feature vector.

Herein, for a specific implementation of S2, refer to related content of step 1003. Details are not described herein again.

S3: Input the third feature vector into the gesture recognition model, to obtain a type that is of the third gesture and that is output by the gesture recognition model.

The following describes in detail a gesture recognition process in this application with reference to a specific example.

The gesture recognition process includes two phases: a feature extraction phase and a feature classification phase. A model in the feature extraction phase completes learning before delivery and is fixed and does not require repeated learning. A model in the feature classification phase uses a lightweight gesture recognition model, depends little on data, and can quickly learn a customized gesture.

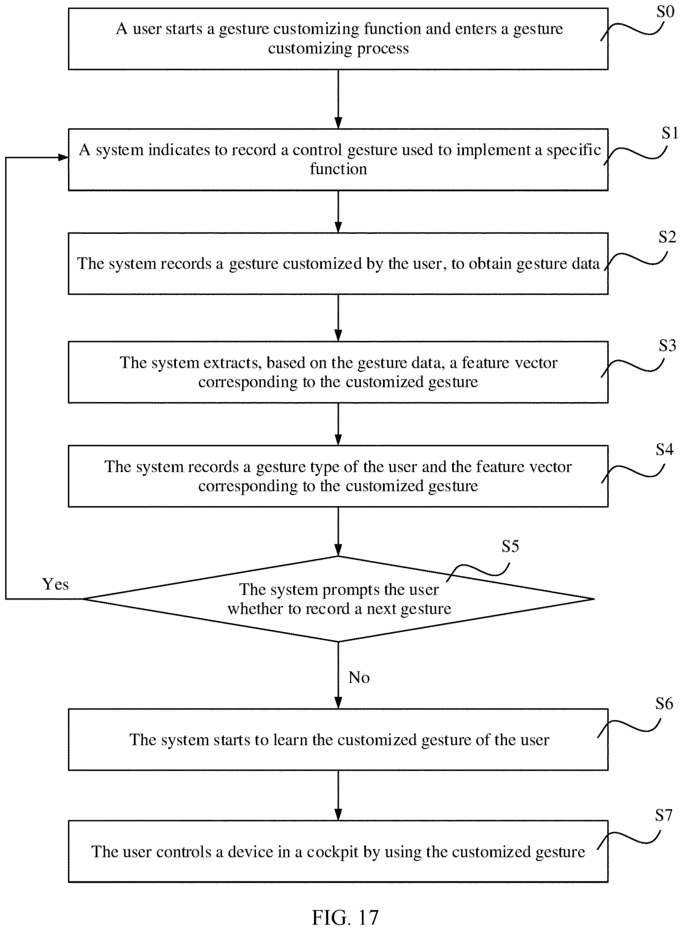

As shown in FIG. 17, the gesture recognition process includes the following steps.

S0: Preparation phase: A user starts a gesture customizing function and enters a gesture customizing process.

S1: A system prompts to record a control gesture used to implement a specific function.

For example, the system may interact with the user through a display, to prompt the user to record a control gesture of a specific function (for example, a call answering function). In this case, it is equivalent to that a gesture classification algorithm obtains a label of training data. Then, the user may make, based on a prompt, a customized gesture that the user likes, to bind the specific function (for example, the call answering function).

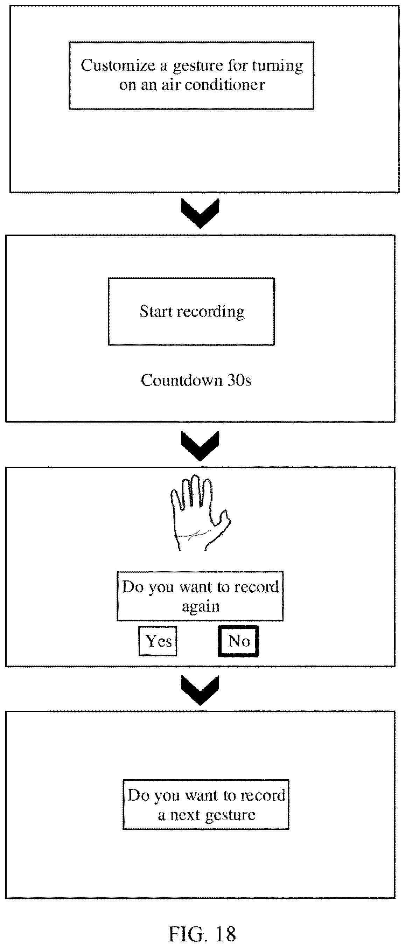

As shown in FIG. 18, prompt content "Customize a gesture used to turn on a mid-air conditioner" may be displayed on a display in a vehicle. Certainly, the prompt content may alternatively be broadcast through a voice. Alternatively, the prompt content may be broadcast through a voice when the prompt content is displayed. After the prompt content is displayed, the user may be prompted to start recording, to remind the user to make a customized gesture in time. A countdown may also be displayed.

S2: The system records the gesture customized by the user, to obtain gesture data.

In a process of recording the customized gesture, the user may define a new gesture, or the system may provide a new gesture that needs to be recorded. For example, an animation guide of the gesture may be provided on the display, and action essentials may be also displayed on the display or broadcast through a voice, for example, "Record customized gesture data of different angles and positions for 30s".

Image displaying is provided on a display in a recording process, so that the user knows whether a gesture recorded by the system is consistent with the gesture made by the user. For example, in FIG. 18, a user interface displays a five-finger opening gesture. Then, the user may be prompted whether to re-record a gesture. If the user selects to re-record the gesture, the user is prompted to continue to record the gesture. If the user selects not to re-record the gesture, the user is prompted whether to record a next gesture.

S3: The system extracts, based on the gesture data, a feature vector corresponding to the customized gesture.

S4: The system records a gesture type of the user and the feature vector corresponding to the customized gesture.

Specifically, the system associates the gesture type (namely, a label, for example, answering a call) with the feature vector corresponding to the customized gesture, to obtain a training sample of the gesture type.

The foregoing S2 to S4 are an inference process of the phase 1.

S5: The system prompts the user whether to record a next gesture; if a result received by the system is yes, step S1 is performed, for example, the system prompts the user to record a control gesture of a next specific function (for example, a starting music function); and if a result received by the system is no, step S6 is performed.

For example, if gestures of a plurality of specific functions need to be recorded, data of different positions and postures may be collected for about 30s for each gesture, to obtain sufficient training data. During 30s when the user records one gesture, the inference process of the phase 1 is also executed in the background, to perform hand detection, hand key point detection, and feature extraction on each collected image in sequence, to obtain a feature vector of a hand. In this way, feature extraction is performed by using time of interaction between the system and the user, so that the user can subjectively feel that there is no too much waiting time and learning time.

S6: The system starts to learn the customized gesture of the user.

Herein, S6 is a learning phase of the phase 2. To be specific, the system uses the obtained feature vector and label as a training set, to train the gesture recognition model.

S7: The user controls a device in a cockpit by using the customized gesture.

Step S7 is a model joint inference phase in the phase 1 and the phase 2. Because learning of models in the phase 1 and the phase 2 is completed, the system may recognize a customized gesture made by the user, and trigger a corresponding gesture function (for example, answering a call or starting music). The system performs hand detection, key point detection, feature extraction, and gesture classification on an input image collected by a camera in sequence, and completely runs all models of an entire gesture recognition pipeline.

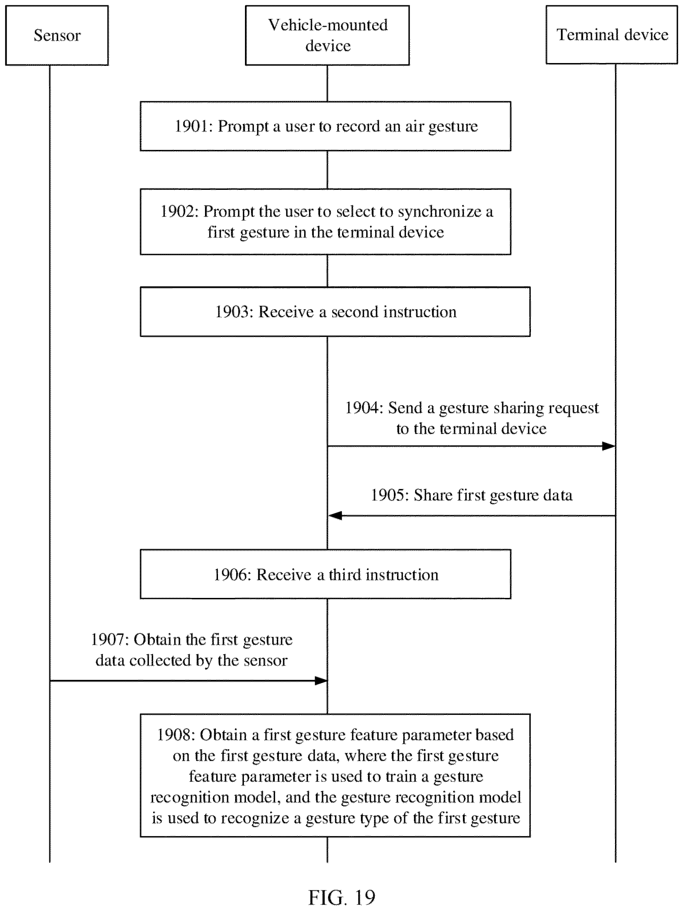

Based on the foregoing content, the first gesture data in step 1002 may also be obtained from a terminal device. This application provides a man-machine interaction method, and the method is performed by a man-machine interaction system. The man-machine interaction system includes a vehicle-mounted device, a sensor, and a terminal device. As shown in FIG. 19, the man-machine interaction method includes the following steps.

Step 1901: The vehicle-mounted device prompts a user to record an air gesture.

Step 1902: The vehicle-mounted device prompts the user to select to synchronize a first gesture in the terminal device. Then, step 1903 to step 1905 or step 1906 is performed.

Step 1903: The vehicle-mounted device receives a second instruction, where the second instruction instructs to synchronize the first gesture in the terminal device.

Step 1904: The vehicle-mounted device sends a gesture sharing request to the terminal device.

Step 1905: The terminal device shares first gesture data with the vehicle-mounted device in response to the gesture sharing request.

Step 1906: The vehicle-mounted device receives a third instruction, where the third instruction instructs not to synchronize the first gesture in the terminal device.

Step 1907: The vehicle-mounted device obtains the first gesture data collected by the sensor.

Step 1908: The vehicle-mounted device obtains a first gesture feature parameter based on the first gesture data, and trains a neural network model by using the first gesture feature parameter and a type of the first gesture, to obtain a gesture recognition model.

In this embodiment of this application, for specific implementation of obtaining the first gesture feature parameter based on the first gesture data, and training the neural network model by using the first gesture feature parameter and the type of the first gesture, to obtain the gesture recognition model, refer to related content in the method shown in FIG. 10. Details are not described herein again.

According to the foregoing method, in an in-vehicle scenario to which the man-machine interaction method is applicable, when recording the air gesture, the vehicle-mounted device may synchronize gesture data from another device (for example, the terminal device used by the user), without requiring a gesture made by the user. This can simplify a user operation and improve user experience.

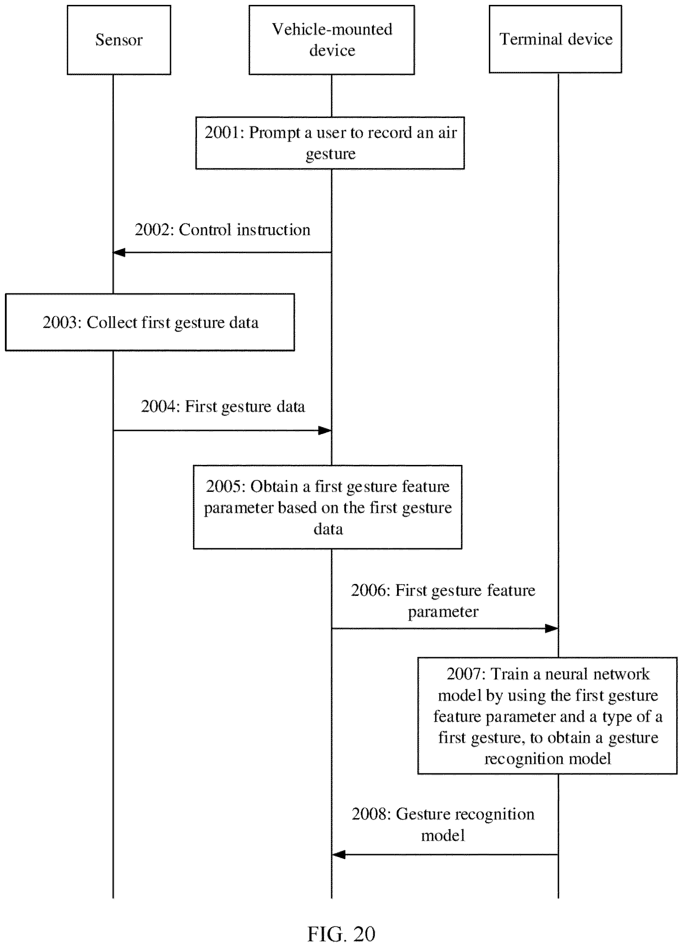

Based on the foregoing content, to save a computing resource of a processing apparatus on a vehicle end, a gesture recognition model training process that has a high computing power requirement may be completed on a server end. An embodiment of this application provides a man-machine interaction method that is implemented by a man-machine interaction system. The man-machine interaction system includes a vehicle-mounted device, a sensor, and a server. As shown in FIG. 20, the man-machine interaction method includes the following steps.

Step 2001: The vehicle-mounted device prompts a user to record an air gesture.

Step 2002: The vehicle-mounted device sends a control instruction to the sensor, where the control instruction is used to control the sensor to collect gesture data.

Step 2003: The sensor collects first gesture data, where the first gesture data represents a first gesture made by a user.

Step 2004: The sensor sends the first gesture data to the vehicle-mounted device.

Step 2005: The vehicle-mounted device obtains a first gesture feature parameter based on the first gesture data.

Step 2006: The vehicle-mounted device sends the first gesture feature parameter to the server.

Step 2007: The server trains a neural network model by using the first gesture feature parameter and a type of the first gesture, to obtain a gesture recognition model.

Step 2008: The server sends the gesture recognition model to the vehicle-mounted device, where the gesture recognition model is used to recognize the first gesture represented by the first gesture feature parameter, to obtain the gesture type of the first gesture.

In this embodiment of this application, for specific implementation of obtaining the first gesture feature parameter based on the first gesture data, and training the neural network model by using the first gesture feature parameter and the type of the first gesture, to obtain the gesture recognition model, refer to related content in the method shown in FIG. 10. Details are not described herein again.

According to the foregoing method, a process in which the vehicle-mounted device processes gesture data, and trains the gesture recognition model may be completed on the server, so that a computing resource on a vehicle end can be saved.

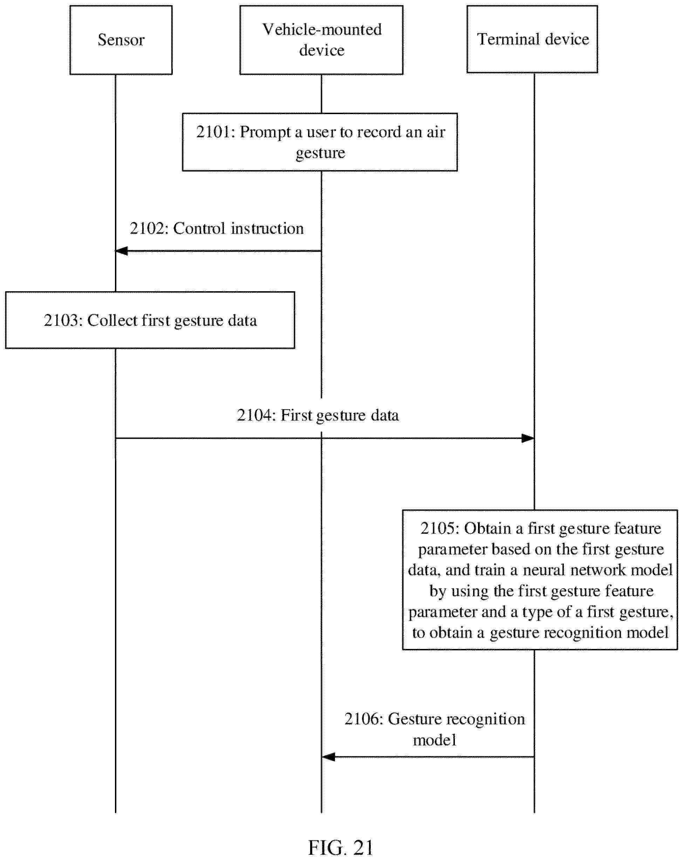

An embodiment of this application provides another man-machine interaction method that is implemented by a man-machine interaction system. The man-machine interaction system includes a vehicle-mounted device, a sensor, and a server. As shown in FIG. 21, the man-machine interaction method includes the following steps.

Step 2101: The vehicle-mounted device prompts a user to record an air gesture.

Step 2102: The vehicle-mounted device sends a control instruction to the sensor, where the control instruction is used to control the sensor to collect gesture data.

Step 2103: The sensor collects first gesture data, where the first gesture data represents a first gesture made by a user.

Step 2104: The sensor sends the first gesture data to the server through the vehicle-mounted device.

Step 2105: The server obtains a first gesture feature parameter based on the first gesture data, and trains a neural network model by using the first gesture feature parameter and a type of the first gesture, to obtain a gesture recognition model.

Step 2106: The server sends the gesture recognition model to the vehicle-mounted device, where the gesture recognition model is used to recognize the first gesture represented by the first gesture feature parameter, to obtain the gesture type of the first gesture.

According to the foregoing method, a gesture data processing and gesture recognition model training process may be completed on the server, so that a computing resource of a vehicle end can be further saved.

It may be understood that, in the foregoing method embodiments, methods and operations implemented by the processing apparatus may also be implemented by a component (for example, a chip or a circuit) that may be used in the processing apparatus.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

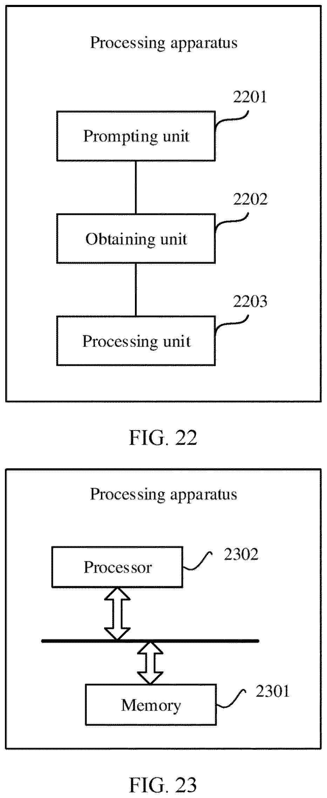

Based on the foregoing content and a same concept, FIG. 22 is a schematic diagram of a structure of a possible processing apparatus according to this application. The processing apparatus may be configured to implement the functions of the processing apparatus in the foregoing method embodiments, and therefore can also implement beneficial effect of the foregoing method embodiments.

As shown in FIG. 22, the processing apparatus 2200 includes a prompting unit 2201, an obtaining unit 2202, and a processing unit 2203.

The prompting unit 2201 is configured to prompt a user to record an air gesture.

The obtaining unit 2202 is configured to obtain first gesture data collected by a sensor disposed on a vehicle, where the first gesture data represents a first gesture made by the user, and the first gesture is used to control a first function of the vehicle.

The processing unit 2203 is configured to obtain a first gesture feature parameter based on the first gesture data, where the first gesture feature parameter is used to train a gesture recognition model, and the gesture recognition model is used to recognize a gesture type of the first gesture.

In a possible implementation, the processing unit 2203 is specifically configured to process the first gesture data by using a feature extraction model, to obtain the first gesture feature parameter, where the feature extraction model is obtained through training based on gesture data and a hand key point before delivery of the vehicle.

In a possible implementation, the feature extraction model includes a hand detection model and a key point detection model. The processing unit 2203 is specifically configured to: input the first gesture data into the hand detection model, to obtain a hand image output by the hand detection model; input the hand image into the key point detection model, to obtain hand key point information that corresponds to the hand image and that is output by the key point detection model; and extract, based on the hand key point information corresponding to the hand image, the first gesture feature parameter corresponding to the hand image.

In a possible implementation, the processing unit 2203 is further configured to store the first gesture feature parameter as a first feature vector, where the first gesture feature parameter includes one or more of the following parameters: a finger bending degree of a finger; an included angle between two fingers; a rotation angle of a hand, where the rotation angle of the hand represents a degree of rotation of a palm relative to a vertical direction; or a distance between the hand and a first sensor, where the first sensor is a sensor configured to collect the first gesture data.

In a possible implementation, the processing unit 2203 is further configured to train a neural network model based on the first gesture feature parameter and the gesture type of the first gesture, to obtain the gesture recognition model, where the gesture recognition model is used to recognize the first gesture represented by the first gesture feature parameter, to obtain the gesture type of the first gesture.

In a possible implementation, the first gesture data includes a plurality of red green blue RGB values, and the RGB values are determined by an RGB image corresponding to the first gesture.

In a possible implementation, the first gesture data includes a plurality of RGB values and depth values, the plurality of RGB values are determined by the RGB image corresponding to the first gesture, and the depth values are determined by a depth map corresponding to the first gesture.

In a possible implementation, the obtaining unit 2202 is further configured to obtain second gesture data collected by the sensor disposed on the vehicle, where the second gesture data represents a second gesture made by the user, and the second gesture is used to control a second function of the vehicle, where the second gesture is different from the first gesture, and the second function is different from the first function.

In a possible implementation, the first gesture data is obtained through any one or more of the following sensors: a red green blue RGB camera, a time of flight (TOF) camera, an ultrasonic sensor, and a structured light sensor.

In a possible implementation, the prompting unit is specifically configured to prompt the user to record an air gesture displayed on a user interface.

In a possible implementation, the processing unit 2203 is further configured to display image information of the first gesture data through the user interface, so that the user determines whether a gesture corresponding to the first gesture data is consistent with the gesture made by the user.

In a possible implementation, the prompting unit is further configured to indicate gesture recording progress.

In a possible implementation, the prompting unit is further configured to indicate that gesture recording is completed.

In a possible implementation, the prompting unit is specifically configured to: indicate whether to record a next air gesture; and after a first instruction is received, indicate that gesture recording is completed, where the first instruction instructs not to record the next air gesture.

In a possible implementation, the obtaining unit 2202 is further configured to obtain third gesture data collected by the sensor disposed on the vehicle, where the third gesture data indicates a third gesture that has been defined by the user. The processing unit 2203 is further configured to: process the third gesture data by using the feature extraction model, to obtain a third gesture feature parameter, where the third gesture feature parameter is stored as a third feature vector; input the third feature vector into the gesture recognition model, to obtain a type that is of the third gesture and that is output by the gesture recognition model; and respond to a function corresponding to the type of the third gesture.

The units in the foregoing embodiment may also be implemented by using hardware. For example, the processing apparatus includes a memory and at least one processor. The memory is configured to store computer instructions. The at least one processor may be configured to implement functions of the prompting unit 2201, the obtaining unit 2202, and the processing unit 2203.

In some other embodiments, the processing apparatus may further include a memory, at least one processor, and any one or more components of a display, a speaker, or a vibration sensor. The one or more components may be configured to implement a function of the prompting unit 2201. The at least one processor may be configured to implement functions of the obtaining unit 2202 and the processing unit 2203.

In a possible embodiment, the processing apparatus may alternatively be a chip, and the chip may implement functions of the prompting unit 2201, the obtaining unit 2202, and the processing unit 2203.

In another possible implementation, the processing apparatus may alternatively be a chip. The chip may be configured to implement functions of the obtaining unit 2202 and the processing unit 2203. The chip may further implement a function of the prompting unit 2201 through any one or more of a display, a speaker, or a vibration sensor.

For concepts, explanations, detailed descriptions, and other steps that are involved in the processing apparatus and that are related to the technical solutions provided in embodiments of this application, refer to the descriptions of the content in the foregoing method or other embodiments. Details are not described herein again.

According to the foregoing method, FIG. 23 is a schematic diagram of a structure of a processing apparatus according to an embodiment of this application. As shown in FIG. 23, the processing apparatus 2300 may include a memory 2301 and a processor 2302, and optionally, may further include a bus system. The processor 2302 and the memory 2301 may be connected by using the bus system.

It should be understood that the processor 2302 may be a chip. For example, the processor 2302 may be a field programmable gate array (field programmable gate array, FPGA), an application-specific integrated circuit (application-specific integrated circuit, ASIC), a system on a chip (system on a chip, SoC), a central processor unit (central processor unit, CPU), a network processor (network processor, NP), a digital signal processor (digital signal processor, DSP), a microcontroller unit (micro controller unit, MCU), a programmable logic device (programmable logic device, PLD), or another integrated chip.

In an implementation process, steps of the methods may be completed by using an integrated logic circuit of hardware in the processor 2302 or instructions in a form of software. The steps of the method disclosed with reference to embodiments of this application may be directly performed by a hardware processor, or may be performed by using a combination of hardware in the processor 2302 and a software module. A software module may be located in a mature storage medium in the art, such as a random access memory, a flash memory, a read-only memory, a programmable read-only memory, an electrically erasable programmable memory, or a register. The storage medium is located in the memory 2301, and the processor 2302 reads information in the memory 2301 and completes the steps in the method in combination with hardware in the processor.

It should be noted that, the processor 2302 in embodiments of this application may be an integrated circuit chip, and has a signal processing capability. In an implementation process, steps in the foregoing method embodiments may be implemented by using a hardware integrated logic circuit in the processor or instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the method in combination with hardware in the processor.

It may be understood that the memory 2301 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synclink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to methods provided in embodiments of this application, this application further provides a computing device, including a memory and at least one processor, where the memory is configured to store computer instructions, and the at least one processor is configured to execute the computer instructions stored in the memory, so that the computing device performs the methods in the foregoing method embodiments.

According to the methods provided in embodiments of concept, this application further provides a computer-readable storage medium. The computer-readable storage medium stores a computer program or instructions. When the computer program or the instructions are executed, a computing device is enabled to perform the methods in the foregoing method embodiments.

According to the methods provided in embodiments of this application, this application further provides a computer program product. When a computer reads and executes the computer program product, a computing device is enabled to perform the methods in the foregoing method embodiments.

According to the methods provided in embodiments of this application, this application further provides a chip, including at least one processor and an interface, the interface is configured to provide program instructions or data for the at least one processor, and the at least one processor is configured to execute the program instructions, so that the method in the foregoing method embodiments is performed.

According to the methods provided in embodiments of this application, an embodiment of this application further provides a processing apparatus. The processing apparatus includes a processor and an interface circuit. The interface circuit is configured to receive a program or instruction code and transmit the program or instruction code to the processor. The processor runs the program or the instruction code to perform the method in the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are entirely or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid-state drive, SSD)), or the like.

It should be noted that a part of this patent application document includes content protected by copyright. Except for making copies of patent documents of the Patent Office or recorded content of patent documents, the copyright owner reserves the copyright.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

Embodiments described in this application are a part rather than all of the embodiments of this application. A specific operation method in a method embodiment may also be applied to an apparatus embodiment. In descriptions of embodiments of this application, a person of ordinary skill in the art may understand that various reference numerals such as "first" and "second" in this application are merely used for differentiation for ease of description, and are not used to limit the scope of embodiments of this application, and are not used to represent a sequence. "A plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces).

A person of ordinary skill in the art may be aware that, various illustrative logical blocks (illustrative logical block) and steps (step) that are described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A man-machine interaction method, comprising:

       prompting a user to record an air gesture;

obtaining first gesture data collected by a sensor disposed on a vehicle, wherein the first gesture data represents a first gesture made by the user, and the first gesture is used to control a first function of the vehicle; and
obtaining a first gesture feature parameter based on the first gesture data, wherein the first gesture feature parameter is used to train a gesture recognition model, and the gesture recognition model is used to recognize a gesture type of the first gesture.

2. The method according to claim 1, wherein the obtaining a first gesture feature parameter based on the first gesture data comprises:
processing the first gesture data by using a feature extraction model, to obtain the first gesture feature parameter, wherein the feature extraction model is obtained through training based on gesture data and a hand key point before delivery of the vehicle.

3. The method according to claim 2, wherein the feature extraction model comprises a hand detection model and a key point detection model; and
the processing the first gesture data by using a feature extraction model, to obtain the first gesture feature parameter comprises:

inputting the first gesture data into the hand detection model, to obtain a hand image output by the hand detection model;
inputting the hand image into the key point detection model, to obtain hand key point information that corresponds to the hand image and that is output by the key point detection model; and
extracting, based on the hand key point information corresponding to the hand image, the first gesture feature parameter corresponding to the hand image.

4. The method according to claim 2 or 3, wherein after the processing the first gesture data by using a feature extraction model, to obtain the first gesture feature parameter, the method further comprises:
storing the first gesture feature parameter as a first feature vector, wherein the first gesture feature parameter comprises one or more of the following parameters:

a finger bending degree of a finger;
an included angle between two fingers;
a rotation angle of a hand, wherein the rotation angle of the hand represents a degree of rotation of a palm relative to a vertical direction; or
a distance between the hand and a first sensor, wherein the first sensor is a sensor configured to collect the first gesture data.

5. The method according to any one of claims 1 to 4, wherein after the obtaining a first gesture feature parameter based on the first gesture data, the method further comprises:
training a neural network model based on the first gesture feature parameter and the gesture type of the first gesture, to obtain the gesture recognition model, wherein the gesture recognition model is used to recognize the first gesture represented by the first gesture feature parameter, to obtain the gesture type of the first gesture.

6. The method according to any one of claims 1 to 5, wherein the first gesture data comprises a plurality of red green blue RGB values, and the RGB values are determined by an RGB image corresponding to the first gesture.

7. The method according to any one of claims 1 to 6, wherein the first gesture data comprises a plurality of RGB values and depth values, the plurality of RGB values are determined by the RGB image corresponding to the first gesture, and the depth values are determined by a depth map corresponding to the first gesture.

8. The method according to any one of claims 1 to 7, wherein the method further comprises:

obtaining second gesture data collected by the sensor disposed on the vehicle, wherein the second gesture data represents a second gesture made by the user, and the second gesture is used to control a second function of the vehicle, wherein
the second gesture is different from the first gesture, and the second function is different from the first function.

9. The method according to any one of claims 1 to 8, wherein the first gesture data is obtained through any one or more of the following sensors:
a red green blue RGB camera, a time of flight TOF camera, an ultrasonic sensor, and a structured light sensor.

10. The method according to any one of claims 1 to 9, wherein the prompting a user to record an air gesture comprises:
prompting the user to record an air gesture displayed on a user interface.

11. The method according to any one of claims 1 to 10, wherein after the obtaining first gesture data collected by a sensor disposed on a vehicle, the method further comprises:
displaying image information of the first gesture data through the user interface, so that the user determines whether a gesture corresponding to the first gesture data is consistent with a gesture made by the user.

12. The method according to any one of claims 1 to 11, wherein the method further comprises:
indicating gesture recording progress.

13. The method according to any one of claims 1 to 12, wherein after the obtaining first gesture data collected by a sensor disposed on a vehicle, the method further comprises:
indicating that gesture recording is completed.

14. The method according to claim 13, wherein before the indicating that gesture recording is completed, the method further comprises:

indicating whether to record a next air gesture; and
the indicating that gesture recording is completed comprises:
after a first instruction is received, indicating that gesture recording is completed, wherein the first instruction instructs not to record the next air gesture.

15. The method according to any one of claims 1 to 14, wherein the method further comprises:

obtaining third gesture data collected by the sensor disposed on the vehicle, wherein the third gesture data indicates a third gesture that has been defined by the user;
processing the third gesture data by using the feature extraction model, to obtain a third gesture feature parameter, wherein the third gesture feature parameter is stored as a third feature vector;
inputting the third feature vector into the gesture recognition model, to obtain a type that is of the third gesture and that is output by the gesture recognition model; and
responding to a function corresponding to the type of the third gesture.

16. A processing apparatus, comprising:

a prompting unit, configured to prompt a user to record an air gesture;
an obtaining unit, configured to obtain first gesture data collected by a sensor disposed on a vehicle, wherein the first gesture data represents a first gesture made by the user, and the first gesture is used to control a first function of the vehicle; and
a processing unit, configured to obtain a first gesture feature parameter based on the first gesture data, wherein the first gesture feature parameter is used to train a gesture recognition model, and the gesture recognition model is used to recognize a gesture type of the first gesture.

17. The apparatus according to claim 16, wherein the processing unit is specifically configured to:
process the first gesture data by using a feature extraction model, to obtain the first gesture feature parameter, wherein the feature extraction model is obtained through training based on gesture data and a hand key point before delivery of the vehicle.

18. The apparatus according to claim 17, wherein the feature extraction model comprises a hand detection model and a key point detection model; and
the processing unit is specifically configured to:

input the first gesture data into the hand detection model, to obtain a hand image output by the hand detection model;
input the hand image into the key point detection model, to obtain hand key point information that corresponds to the hand image and that is output by the key point detection model; and
extract, based on the hand key point information corresponding to the hand image, the first gesture feature parameter corresponding to the hand image.

19. The apparatus according to claim 17 or 18, wherein the processing unit is further configured to:
store the first gesture feature parameter as a first feature vector, wherein the first gesture feature parameter comprises one or more of the following parameters:

a finger bending degree of a finger;
an included angle between two fingers;
a rotation angle of a hand, wherein the rotation angle of the hand represents a degree of rotation of a palm relative to a vertical direction; or
a distance between the hand and a first sensor, wherein the first sensor is a sensor configured to collect the first gesture data.

20. The apparatus according to any one of claims 16 to 19, wherein the processing unit is further configured to:
train a neural network model based on the first gesture feature parameter and the gesture type of the first gesture, to obtain the gesture recognition model, wherein the gesture recognition model is used to recognize the first gesture represented by the first gesture feature parameter, to obtain the gesture type of the first gesture.

21. The apparatus according to any one of claims 16 to 20, wherein the first gesture data comprises a plurality of red green blue RGB values, and the RGB values are determined by an RGB image corresponding to the first gesture.

22. The apparatus according to any one of claims 16 to 21, wherein the first gesture data comprises a plurality of RGB values and depth values, the plurality of RGB values are determined by the RGB image corresponding to the first gesture, and the depth values are determined by a depth map corresponding to the first gesture.

23. The apparatus according to any one of claims 16 to 22, wherein the obtaining unit is further configured to:

   obtain second gesture data collected by the sensor disposed on the vehicle, wherein the second gesture data represents a second gesture made by the user, and the second gesture is used to control a second function of the vehicle, wherein the second gesture is different from the first gesture, and the second function is different from the first function.

24. The apparatus according to any one of claims 16 to 23, wherein the first gesture data is obtained through any one or more of the following sensors:
   a red green blue RGB camera, a time of flight TOF camera, an ultrasonic sensor, and a structured light sensor.

25. The apparatus according to any one of claims 16 to 24, wherein the prompting unit is specifically configured to:
   prompt the user to record an air gesture displayed on a user interface.

26. The apparatus according to any one of claims 16 to 25, wherein the processing unit is further configured to:
   display image information of the first gesture data through the user interface, so that the user determines whether a gesture corresponding to the first gesture data is consistent with a gesture made by the user.

27. The apparatus according to any one of claims 16 to 26, wherein the prompting unit is further configured to:
   indicate gesture recording progress.

28. The apparatus according to any one of claims 16 to 27, wherein the prompting unit is further configured to:
   indicate that gesture recording is completed.

29. The apparatus according to claim 28, wherein the prompting unit is specifically configured to:

   indicate whether to record a next air gesture; and after a first instruction is received, indicate that gesture recording is completed, wherein the first instruction instructs not to record the next air gesture.

30. The apparatus according to any one of claims 16 to 29, wherein the obtaining unit is further configured to:

   obtain third gesture data collected by the sensor disposed on the vehicle, wherein the third gesture data indicates a third gesture that has been defined by the user; and
   the processing unit is further configured to:

      process the third gesture data by using the feature extraction model, to obtain a third gesture feature parameter, wherein the third gesture feature parameter is stored as a third feature vector;
      input the third feature vector into the gesture recognition model, to obtain a type that is of the third gesture and that is output by the gesture recognition model; and
      respond to a function corresponding to the type of the third gesture.

31. A man-machine interaction system, comprising a vehicle-mounted device and a terminal device, wherein

   the vehicle-mounted device is configured to: prompt a user to select to synchronize a first gesture in the terminal device; and when receiving a second instruction, send a gesture sharing request to the terminal device, wherein the second instruction instructs to synchronize the first gesture in the terminal device;
   the terminal device is configured to share first gesture data with the vehicle-mounted device in response to the gesture sharing request; and
   the vehicle-mounted device is further configured to obtain a first gesture feature parameter based on the first gesture data, wherein the first gesture feature parameter is used to train a gesture recognition model, and the gesture recognition model is used to recognize a gesture type of the first gesture.

32. The system according to claim 31, wherein the man-machine interaction system further comprises a sensor, configured to:
   collect the first gesture data when receiving a third instruction, wherein the third instruction instructs not to synchronize the first gesture in the terminal device.

**33.** A man-machine interaction system, comprising a vehicle-mounted device, a sensor, and a server, wherein

the vehicle-mounted device is configured to prompt a user to record an air gesture; the sensor is configured to: collect first gesture data, and send the first gesture data to the vehicle-mounted device, wherein the first gesture data represents a first gesture made by a user; the vehicle-mounted device is further configured to: obtain a first gesture feature parameter based on the first gesture data, and send the first gesture feature parameter to the server; and the server is configured to: train a neural network model by using the first gesture feature parameter and a type of the first gesture, to obtain a gesture recognition model; and send the gesture recognition model to the vehicle-mounted device, wherein the gesture recognition model is used to recognize the first gesture represented by the first gesture feature parameter, to obtain the gesture type of the first gesture.

**34.** A man-machine interaction system, comprising a vehicle-mounted device, a sensor, and a server, wherein

the vehicle-mounted device is configured to prompt a user to record an air gesture; the sensor is configured to: collect first gesture data, and send the first gesture data to the vehicle-mounted device, wherein the first gesture data represents a first gesture made by a user; the vehicle-mounted device is further configured to send the first gesture data to the server; and the server is configured to: obtain a first gesture feature parameter based on the first gesture data; train a neural network model by using the first gesture feature parameter and a type of the first gesture, to obtain a gesture recognition model; and send the gesture recognition model to the vehicle-mounted device, wherein the gesture recognition model is used to recognize the first gesture represented by the first gesture feature parameter, to obtain the gesture type of the first gesture.

**35.** A computing device, wherein the apparatus comprises a memory and at least one processor, the memory is configured to store computer instructions, and the at least one processor is configured to execute the computer instructions stored in the memory, so that the computing device performs the method according to any one of claims 1 to 15.

**36.** A chip, comprising at least one processor and an interface, wherein

the interface is configured to provide program instructions or data for the at least one processor; and the at least one processor is configured to execute the program instructions, so that the method according to any one of claims 1 to 15 is performed.

**37.** A computer-readable storage medium, wherein the computer-readable storage medium stores a computer program, and when the computer program is executed by a computing device, the computing device is enabled to perform the method according to any one of claims 1 to 15.

**38.** A computer program product, wherein the computer program product comprises a computer program or instructions, and when the computer program or the instructions are executed on a computer, the method according to any one of claims 1 to 15 is implemented.

Training phase —— Training data + label ——→ [Classification model training] —— Image classification model ——→

Inference phase —— Original gesture image ——→ [Image classification model] —— Specific gesture type ——→

FIG. 1

Training phase —— Training data + label ——→ [Convolutional neural network training]

[Manually formulating a determining rule]

Inference phase —— Original gesture image ——→ [Key point detection model] —— Finger key point ——→ [Recognition with the manually formulated determining rule] —— Specific gesture type ——→

FIG. 2

Vehicle 100

FIG. 3

FIG. 4

FIG. 5

FIG. 6

FIG. 7

| A user performs a gesture action | Collecting gesture data → | Sensor | Gesture data → | Vehicle-mounted computing platform (recognizing a gesture type) | Control instruction → | Vehicle-mounted device |

Display

FIG. 8

| Hand detection | → | Key point detection | → | Feature engineering | → | Gesture classification |

Phase 1          Phase 2

FIG. 9

```
                                                                    1001
┌──────────────────────────────────────────────────────────┐
│                                                            │
│         Prompt a user to record an air gesture             │
│                                                            │
└──────────────────────────────────────────────────────────┘
                              │
                              ▼
                                                                    1002
┌──────────────────────────────────────────────────────────┐
│                                                            │
│  Obtain first gesture data collected by a sensor disposed  │
│                      on a vehicle                          │
└──────────────────────────────────────────────────────────┘
                              │
                              ▼
                                                                    1003
┌──────────────────────────────────────────────────────────┐
│  Perform processing based on the first gesture data, to    │
│          obtain a first gesture feature parameter          │
└──────────────────────────────────────────────────────────┘
```

FIG. 10

FIG. 11

FIG. 12

FIG. 13

FIG. 14

FIG. 15

FIG. 16

A user starts a gesture customizing function and enters a gesture customizing process — S0

A system indicates to record a control gesture used to implement a specific function — S1

The system records a gesture customized by the user, to obtain gesture data — S2

The system extracts, based on the gesture data, a feature vector corresponding to the customized gesture — S3

The system records a gesture type of the user and the feature vector corresponding to the customized gesture — S4

The system prompts the user whether to record a next gesture — S5

Yes

No

The system starts to learn the customized gesture of the user — S6

The user controls a device in a cockpit by using the customized gesture — S7

FIG. 17

Customize a gesture for turning
on an air conditioner

Start recording

Countdown 30s

Do you want to record
again

Yes    No

Do you want to record
a next gesture

FIG. 18

Sensor

Vehicle-mounted
device

Terminal device

1901: Prompt a user to record an air gesture

1902: Prompt the user to select to synchronize a
first gesture in the terminal device

1903: Receive a second instruction

1904: Send a gesture sharing request
to the terminal device

1905: Share first gesture data

1906: Receive a third instruction

1907: Obtain the first gesture
data collected by the sensor

1908: Obtain a first gesture feature parameter based
on the first gesture data, where the first gesture
feature parameter is used to train a gesture
recognition model, and the gesture recognition model
is used to recognize a gesture type of the first gesture

FIG. 19

```
┌──────────┐        ┌──────────────┐         ┌────────────────┐
│  Sensor  │        │Vehicle-mounted│        │ Terminal device │
│          │        │    device    │         │                │
└────┬─────┘        └──────┬───────┘         └────────┬───────┘
     │                     │                          │
     │        ┌────────────┴───────────────┐          │
     │        │ 2001: Prompt a user to record an air  │
     │        │            gesture         │          │
     │        └────────────┬───────────────┘          │
     │                     │                          │
     │   2002: Control instruction                    │
     │◄────────────────────┤                          │
     │                     │                          │
┌────┴──────────────────────┐                         │
│ 2003: Collect first gesture data                    │
└────┬──────────────────────┘                         │
     │                     │                          │
     │   2004: First gesture data                     │
     ├────────────────────►│                          │
     │                     │                          │
     │        ┌────────────┴───────────────┐          │
     │        │ 2005: Obtain a first gesture feature  │
     │        │ parameter based on the first gesture  │
     │        │              data          │          │
     │        └────────────┬───────────────┘          │
     │                     │                          │
     │              2006: First gesture feature       │
     │                     parameter                  │
     │                     ├─────────────────────────►│
     │                     │        ┌─────────────────┴────────┐
     │                     │        │ 2007: Train a neural network
     │                     │        │ model by using the first gesture
     │                     │        │ feature parameter and a type of a
     │                     │        │ first gesture, to obtain a gesture
     │                     │        │       recognition model  │
     │                     │        └─────────────────┬────────┘
     │                     │                          │
     │              2008: Gesture recognition         │
     │                       model                    │
     │                     │◄─────────────────────────┤
     │                     │                          │
```

FIG. 20

Sensor

Vehicle-mounted device

Terminal device

2101: Prompt a user to record an air gesture

2102: Control instruction

2103: Collect first gesture data

2104: First gesture data

2105: Obtain a first gesture feature parameter based on the first gesture data, and train a neural network model by using the first gesture feature parameter and a type of a first gesture, to obtain a gesture recognition model

2106: Gesture recognition model

FIG. 21

Processing apparatus

Prompting unit 2201

Obtaining unit 2202

Processing unit 2203

FIG. 22

Processing apparatus

Processor 2302

Memory 2301

FIG. 23

| INTERNATIONAL SEARCH REPORT | International application No. |
|---|---|
| | **PCT/CN2021/143960** |

**A. CLASSIFICATION OF SUBJECT MATTER**

G06F 3/01(2006.01)i; G06K 9/00(2022.01)i

According to International Patent Classification (IPC) or to both national classification and IPC

**B. FIELDS SEARCHED**

Minimum documentation searched (classification system followed by classification symbols)

G06F; G06K

Documentation searched other than minimum documentation to the extent that such documents are included in the fields searched

Electronic data base consulted during the international search (name of data base and, where practicable, search terms used)

CNPAT, CNKI, WPI, EPODOC: 华为, 徐鑫, 手势, 识别, 特征, 参数, 模型, 训练, 角度, 弯曲, 手指, 夹角, 共享手势, hand, finger, gesture, recognition, model, feature, training, angle, curvature, share, characteristic, parameter, NN, neural w network

**C. DOCUMENTS CONSIDERED TO BE RELEVANT**

| Category* | Citation of document, with indication, where appropriate, of the relevant passages | Relevant to claim No. |
|---|---|---|
| X | CN 111782039 A (FOSHAN UNIVERSITY) 16 October 2020 (2020-10-16) description, paragraphs [0057]-[0102], and figures 1-3 | 1, 5, 8-16, 20, 23-30, 33-38 |
| Y | CN 111782039 A (FOSHAN UNIVERSITY) 16 October 2020 (2020-10-16) description, paragraphs [0057]-[0102], and figures 1-3 | 2-4, 6-7, 17-19, 21-22 |
| Y | CN 111857334 A (SHANGHAI JIAO TONG UNIVERSITY) 30 October 2020 (2020-10-30) description, paragraphs [0048]-[0075], and figures 1-3 | 2-4, 6-7, 17-19, 21-22 |
| A | CN 113741427 A (NANJING UNIVERSITY OF FINANCE AND ECONOMICS et al.) 03 December 2021 (2021-12-03) entire document | 1-38 |
| A | CN 112639689 A (HUAWEI TECHNOLOGIES CO., LTD.) 09 April 2021 (2021-04-09) entire document | 1-38 |
| A | CN 108462729 A (BEIJING SAMSUNG TELECOM R&D CENTER et al.) 28 August 2018 (2018-08-28) entire document | 1-38 |
| A | CN 104777775 A (BEIJING UNIVERSITY OF TECHNOLOGY) 15 July 2015 (2015-07-15) entire document | 1-38 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2022** | **27 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/143960** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2006136846 A1 (IM, Sung-Ho et al.) 22 June 2006 (2006-06-22)<br>entire document | 1-38 |

Form PCT/ISA/210 (second sheet) (January 2015)

INTERNATIONAL SEARCH REPORT
Information on patent family members

International application No.

**PCT/CN2021/143960**

| Patent document cited in search report | | | Publication date (day/month/year) | Patent family member(s) | | | Publication date (day/month/year) |
|---|---|---|---|---|---|---|---|
| CN | 111782039 | A | 16 October 2020 | None | | | |
| CN | 111857334 | A | 30 October 2020 | None | | | |
| CN | 113741427 | A | 03 December 2021 | None | | | |
| CN | 112639689 | A | 09 April 2021 | WO | 2021217570 | A1 | 04 November 2021 |
| CN | 108462729 | A | 28 August 2018 | None | | | |
| CN | 104777775 | A | 15 July 2015 | None | | | |
| US | 2006136846 | A1 | 22 June 2006 | KR | 20060070280 | A | 23 June 2006 |
| | | | | US | 7702130 | B2 | 20 April 2010 |

Form PCT/ISA/210 (patent family annex) (January 2015)